# EUROPEAN PATENT APPLICATION

(11) **EP 4 114 102 A1**
(43) Date of publication of application: **04.01.2023**
(21) Application number: 21781906.9
(22) Date of filing: 26.03.2021
(51) Int. Cl.: H04W 68/00

(54) **COMMUNICATION METHOD AND APPARATUS**

(30) Priority: 02.04.2020 CN 202010257781; 18.05.2020 CN 202010419633; 31.12.2020 CN 202011636879
(71) Applicant: Huawei Technologies Co., Ltd., Shenzhen, Guangdong 518129, (CN)
(72) Inventor: KUANG, Yiru, Shenzhen, Guangdong 518129 (CN); XU, Haibo, Shenzhen, Guangdong 518129 (CN); SHAN, Baokun, Shenzhen, Guangdong 518129 (CN); KONG, Fanhua, Shenzhen, Guangdong 518129 (CN)
(74) Representative: Pfenning, Meinig & Partner mbB
(86) International application number: PCT/CN2021/083367
(87) International publication number: WO 2021/197233

(57) **Abstract**

This application relates to a communication method and a device. A terminal device determines assistance information, where the assistance information is used to determine a paging parameter configured for the terminal device. The terminal device sends the assistance information. In embodiments of this application, the terminal device may send the assistance information to a network device, and the network device may determine, based on the assistance information, the paging parameter configured for the terminal device. The assistance information may indicate a state of the terminal device and the like, so that the paging parameter configured by the network device can meet an actual requirement of the terminal device. For example, the network device may configure a paging transmission window with short duration based on assistance information for a terminal device that does not need to frequently monitor a paging message, so that the terminal device monitors a paging message for a small quantity of times. This helps reduce power consumption of the terminal device and implement energy saving of the terminal device.

## Description

This application claims priority to Chinese Patent Application No. 202010257781.8, filed with the China National Intellectual Property Administration on April 2, 2020 and entitled "METHOD FOR RELAXING MONITORING OF PAGING IN eDRX, UE, AND NETWORK DEVICE"; this application claims priority to Chinese Patent Application No. 202010419633.1, filed with the China National Intellectual Property Administration on May 18, 2020 and entitled "COMMUNICATION METHOD AND DEVICE"; and this application claims priority to Chinese Patent Application No. 202011636879.0, filed with the China National Intellectual Property Administration on December 31, 2020 and entitled "COMMUNICATION METHOD AND DEVICE", which are incorporated herein by reference in their entireties.

### TECHNICAL FIELD

This application relates to the field of communication technologies, and in particular, to a communication method and a device.

### BACKGROUND

A discontinuous reception (discontinuous reception, DRX) mechanism in a long term evolution (long term evolution, LTE) system is still used in a fifth-generation (5 generation, 5G) new radio (new radio, NR) technology. The DRX mechanism includes a DRX cycle. A terminal device periodically "wakes up" for a period of time in the DRX cycle, and may keep in a "sleep" state in other time in the DRX cycle, to reduce power consumption. In addition, when the terminal device is in a radio resource control (radio resource control, RRC) idle (idle) state or an RRC inactive (inactive) state, if a core network or a base station needs to send downlink data to the terminal device, the core network or the base station first sends a paging (paging) message to the terminal device, to page the terminal device. After receiving the paging message, the terminal device initiates an RRC connection establishment procedure to receive the downlink data. A terminal device configured with DRX "wakes up" on a paging occasion (paging occasion, PO) included in the DRX cycle to receive a paging message.

To further reduce power consumption, extended DRX (extended DRX, eDRX) is introduced to the DRX mechanism, to extend the DRX cycle to a larger value. In other words, the terminal device may "sleep" for a longer time and "wake up" again. Apaging transmission window (paging transmission window, PTW) is introduced to eDRX. One eDRX cycle includes one PTW, and the PTW includes one or more POs. In one eDRX cycle, the terminal device "wakes up" on one or more POs in a PTW to receive a paging message, until a paging message including an identity (ID) of the terminal device is successfully received or the PTW ends.

Currently, a core network device configures a paging parameter for the terminal device, for example, configures PTW duration. The terminal device may monitor a paging message based on the paging parameter configured by the core network device. However, the paging parameter configured by the core network device for the terminal device may not meet an actual requirement of the terminal device. For example, the terminal device does not need to frequently monitor a paging message, but the PTW duration configured by the core network device for the terminal device is long. Consequently, the terminal device needs to monitor the paging message for a plurality of times. This is unfavorable to energy saving of the terminal device.

### SUMMARY

Embodiments of this application provide a communication method and a device, so that a paging parameter configured by a network for a terminal device meets an actual requirement of the terminal device as much as possible.

According to a first aspect, a first communication method is provided. The method includes: determining assistance information, where the assistance information is used to determine a paging parameter configured for a terminal device; and sending the assistance information.

The method may be performed by a first communications apparatus. The first communications apparatus may be a communications device, or may be a communications apparatus, for example, a chip, that can support a communications device in implementing a function required in the method. For example, the first communications apparatus is a terminal device, a chip that is disposed in the terminal device and that functions as the terminal device, or another component configured to implement the function of the terminal device. The following description process uses an example in which the first communications apparatus is the terminal device.

In this embodiment of this application, the terminal device may send the assistance information to a network device, and the network device may determine, based on the assistance information, the paging parameter configured for the terminal device. The assistance information may indicate a state of the terminal device and the like, so that the paging parameter configured by the network device can meet an actual requirement of the terminal device. For example, the network device may configure a paging transmission window with short duration based on assistance information for a terminal device that does not need to frequently monitor a paging message, so that the terminal device monitors a paging message for a small quantity of times. This helps reduce power consumption of the terminal device and implement energy saving of the terminal device.

With reference to the first aspect, in a first optional implementation of the first aspect, the assistance information includes one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

For example, the assistance information includes one or more of the following: the type information of the terminal device, the mobility state information of the terminal device, the location information of the terminal device, the duration that is of a paging transmission window and that is expected by the terminal device, the quantity that is of POs in a paging transmission window and that is expected by the terminal device, or a cycle expected by the terminal device for monitoring a PO in a paging transmission window. For example, the assistance information includes the type information of the terminal device. Alternatively, the assistance information includes the mobility state information of the terminal device. Alternatively, the assistance information includes the location information of the terminal device. Alternatively, the assistance information includes the duration that is of a paging transmission window and that is expected by the terminal device. Alternatively, the assistance information includes the quantity that is of POs in a paging transmission window and that is expected by the terminal device. Alternatively, the assistance information includes the cycle expected by the terminal device for monitoring a PO in a paging transmission window. Alternatively, the assistance information includes the type information of the terminal device and the location information of the terminal device. Alternatively, the assistance information includes the duration that is of a paging transmission window and that is expected by the terminal device and the quantity that is of POs in a paging transmission window and that is expected by the terminal device. Alternatively, the assistance information includes the duration that is of a paging transmission window and that is expected by the terminal device and the cycle expected by the terminal device for monitoring a PO in a paging transmission window. A length of the cycle expected by the terminal device for monitoring a PO in a paging transmission window is a cycle expected by the terminal device for monitoring to a PO in a paging transmission window, and the length of the cycle may be an integer multiple of an interval between two consecutive POs in the paging transmission window. Certainly, content included in the assistance information is not limited in this embodiment of this application. For example, in addition to the foregoing information, the assistance information may further include other information, or the assistance information does not include any of the foregoing information, but includes other information.

With reference to the first aspect or the first optional implementation of the first aspect, in a second optional implementation of the first aspect, the method further includes:
receiving first configuration information and/or second configuration information; and
monitoring a paging message based on third configuration information, where the third configuration information is determined based on received configuration information.

The third configuration information is determined based on configuration information received by the terminal device. For example, if the terminal device receives only the first configuration information, the third configuration information may be determined based on the first configuration information. For example, the third configuration information is the same as the first configuration information, or the third configuration information is the first configuration information. For example, if the terminal device receives only the second configuration information, the third configuration information may be determined based on the second configuration information. For example, the third configuration information is the same as the second configuration information, or the third configuration information is the second configuration information. For another example, the terminal device receives the first configuration information and the second configuration information. Therefore, the third configuration information may be determined based on the first configuration information and the second configuration information. For example, the third configuration information is the same as the first configuration information; or the third configuration information is the same as the second configuration information; or the third configuration information is different from both the first configuration information and the second configuration information, but the third configuration information is related to the first configuration information and the second configuration information. To be specific, the terminal device may determine the third configuration information based on the received configuration information. If the terminal device receives a plurality of pieces of configuration information, the terminal device may comprehensively determine the third configuration information based on the plurality of pieces of configuration information. For example, the plurality of pieces of configuration information are from different devices. For example, the first configuration information is from a core network device, and the second configuration information is from an access network device; or the first configuration information is from an access network device, and the second configuration information is from a core network device. Different configuration information represents configurations of different devices for the terminal device. The terminal device comprehensively determines the third configuration information based on the plurality of configurations, so that the determined third configuration information can be more appropriate.

With reference to the second optional implementation of the first aspect, in a third optional implementation of the first aspect, the first configuration information includes first duration and/or a first quantity, the second configuration information includes second duration and/or a second quantity, the first duration and the second duration each are duration of a paging transmission window, and the first quantity and the second quantity each are a quantity of paging occasions that need to be monitored in a paging transmission window.

The first configuration information includes, for example, one or more of the first duration, the first quantity, first sequence number information, or a first cycle. For example, the first configuration information includes the first duration; or the first configuration information includes the first quantity; or the first configuration information includes the first sequence number information; or the first configuration information includes the first cycle; or the first configuration information includes the first duration and the first quantity; or the first configuration information includes the first duration and the first cycle; or the first configuration information includes the first quantity and the first cycle; or the first configuration information includes the first duration, the first quantity, and the first cycle. The first duration is duration of a paging transmission window, the first quantity is a quantity of POs that need to be monitored by the terminal device in a paging transmission window, the first sequence number information is a sequence number (or referred to as an index, a number, or the like) of a PO that needs to be monitored by the terminal device in a paging transmission window, and the first cycle is a cycle in which the terminal device monitors a PO in a paging transmission window. Duration of the first cycle may be an integer multiple of an interval between two consecutive POs in the paging transmission window. Certainly, the first configuration information may further include other information. This is not specifically limited.

With reference to the third optional implementation of the first aspect, in a fourth optional implementation of the first aspect,
the third configuration information includes third duration, the third duration is a larger value or a smaller value in the first duration and the second duration, and the third duration is duration of a paging transmission window; and/or
the third configuration information includes a third quantity, the third quantity is a larger value or a smaller value in the first quantity and the second quantity, and the third quantity is a quantity of paging occasions that need to be monitored in a paging transmission window.

If the terminal device receives the first configuration information and the second configuration information, the terminal device may determine the third configuration information based on the first configuration information and the second configuration information. For example, if the third configuration information includes the third duration, the first configuration information includes the first duration, and the second configuration information includes the second duration, the third duration is, for example, a smaller value in the first duration and the second duration, to reduce power consumption of the terminal device; or the third duration is, for example, a larger value of the first duration and the second duration, to maximize a success rate of monitoring a paging message by the terminal device, and reduce a probability of missed detection by the terminal device. If the third configuration information includes the third quantity, the first configuration information includes the first quantity, and the second configuration information includes the second quantity, the third quantity is, for example, a smaller value in the first quantity and the second quantity, to reduce power consumption of the terminal device; or the third quantity is, for example, a larger value in the first quantity and the second quantity, to maximize a success rate of monitoring a paging message by the terminal device, and reduce a probability of missed detection by the terminal device.

According to a second aspect, a second communication method is provided. The method is applied to a network device, and the method includes: receiving assistance information, where the assistance information is used to determine a paging parameter configured for a terminal device; determining first configuration information based on the assistance information, where the first configuration information is used by the terminal device to monitor a paging message; and sending the first configuration information.

The method may be performed by a second communications apparatus. The second communications apparatus may be a communications device, or may be a communications apparatus, for example, a chip, that can support a communications device in implementing a function required in the method. For example, the second communications apparatus is a network device, a chip that is disposed in the network device and that functions as the network device, or another component configured to implement the function of the network device. The following description process uses an example in which the second communications apparatus is the network device. For example, the network device is a core network device or an access network device.

With reference to the second aspect, in a first optional implementation of the second aspect, the method further includes:
sending a paging message based on the first configuration information; or
receiving second configuration information, determining third configuration information based on the first configuration information and the second configuration information, and sending a paging message based on the third configuration information.

If only the network device determines configuration information, after determining the first configuration information, the network device may send the paging message based on the first configuration information. Alternatively, if another network device other than the network device also determines configuration information, that is, the second configuration information, the network device may receive the second configuration information from the another network device, and determine the third configuration information based on the first configuration information and the second configuration information, to send the paging message based on the third configuration information. A manner in which the network device determines the third configuration information based on the first configuration information and the second configuration information is the same as a manner in which the terminal device determines the third configuration information based on the first configuration information and the second configuration information in the corresponding implementations of the first aspect, so that the third configuration information determined by the network device is the same as that determined by the terminal device, to improve a paging success rate.

With reference to the first optional implementation of the second aspect, in a second optional implementation of the second aspect,
the first configuration information includes first duration and/or a first quantity, the second configuration information includes second duration and/or a second quantity, the first duration and the second duration each are duration of a paging transmission window, and the first quantity and the second quantity each are a quantity of paging occasions that need to be monitored in a paging transmission window.

With reference to the second optional implementation of the second aspect, in a third optional implementation of the second aspect,
the third configuration information includes third duration, the third duration is a larger value or a smaller value in the first duration and the second duration, and the third duration is duration of a paging transmission window; and/or
the third configuration information includes a third quantity, the third quantity is a larger value or a smaller value in the first quantity and the second quantity, and the third quantity is a quantity of paging occasions that need to be monitored in a paging transmission window.

With reference to any one of the second aspect or the first optional implementation of the second aspect to the third optional implementation of the second aspect, in a fourth optional implementation of the second aspect, the assistance information includes one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

With reference to any one of the second aspect or the first possible implementation of the second aspect to the fourth optional implementation of the second aspect, in a fifth optional implementation of the second aspect, the network device is a core network device, and the method further includes:
sending the assistance information and the first configuration information to an access network device serving the terminal device.

The core network device may send the assistance information to the access network device, so that the access network device can also determine corresponding configuration information, for example, the second configuration information, based on the assistance information. In addition, the core network device may further send the first configuration information to the access network device. For example, if the access network device does not determine the configuration information, the access network device may determine to page the terminal device based on the first configuration information. Alternatively, if the access network device also determines the second configuration information, the access network device may also determine the third configuration information based on the first configuration information and the second configuration information.

With reference to any one of the second aspect or the first possible implementation of the second aspect to the fourth optional implementation of the second aspect, in a sixth optional implementation of the second aspect, the network device is an access network device, and the method further includes:
sending the first relaxation configuration to a core network device serving the terminal device.

The access network device may further send the first configuration information to the core network device. For example, if the core network device does not determine the configuration information, the core network device may determine to page the terminal device based on the first configuration information. Alternatively, if the core network device also determines the second configuration information, the core network device may also determine the third configuration information based on the first configuration information and the second configuration information.

For technical effects brought by the second aspect or some implementations of the second aspect, refer to the description of the technical effects brought by the first aspect or the corresponding implementations of the first aspect.

According to a third aspect, a third communication method is provided. The method includes: determining that a first relaxation condition is met, where the first relaxation condition is a condition for relaxed monitoring of a paging message; and monitoring a paging message based on a first relaxation configuration corresponding to the first relaxation condition, where a quantity of times that the terminal device monitors a paging message in the relaxation configuration corresponding to the first relaxation condition is less than a quantity of times that the terminal device monitors a paging message in a normal configuration.

The method may be performed by a third communications apparatus. The third communications apparatus may be a communications device, or may be a communications apparatus, for example, a chip, that can support a communications device in implementing a function required in the method. For example, the third communications apparatus is a terminal device, a chip that is disposed in the terminal device and that functions as the terminal device, or another component configured to implement the function of the terminal device. The following description process uses an example in which the third communications apparatus is the terminal device.

In this embodiment of this application, if the first relaxation condition is met, the terminal device may monitor a paging message based on the first relaxation configuration. The quantity of times that the terminal device monitors a paging message in the first relaxation configuration is less than the quantity of times that the terminal device monitors to a paging message in the normal configuration. Because the quantity of times that the terminal device monitors a paging message is reduced, power consumption of the terminal device can be reduced. In addition, whether a relaxation condition is met can be determined by the terminal device, and does not need to be indicated by a network device, so that a determining manner is more flexible.

With reference to the third aspect, in a first possible implementation of the third aspect, the first relaxation condition includes one or more of the following:
a change value of a measured value obtained by measuring a reference signal in first duration is less than a first threshold;
a measured value obtained by measuring a reference signal in second duration is greater than a second threshold; or
a location of the terminal device is fixed.

The first relaxation condition may include one relaxation condition or a plurality of relaxation conditions. If the first relaxation condition includes one relaxation condition, the relaxation condition may include one or more of the foregoing relaxation conditions. Alternatively, if the first relaxation condition includes a plurality of relaxation conditions, any one of the plurality of relaxation conditions may include one or more of the foregoing relaxation conditions, and different relaxation conditions in the plurality of relaxation conditions may include same or different content. For example, the first relaxation condition includes: The change value of the measured value obtained by measuring the reference signal in the first duration is less than the first threshold. Alternatively, the first relaxation condition includes: The measured value obtained by measuring the reference signal in the second duration is greater than the second threshold. Alternatively, the first relaxation condition includes: The location of the terminal device is fixed. Alternatively, the first relaxation condition includes: The change value of the measured value obtained by measuring the reference signal in the first duration is less than the first threshold, and the measured value obtained by measuring the reference signal in the second duration is greater than the second threshold. Alternatively, the first relaxation condition includes: The change value of the measured value obtained by measuring the reference signal in the first duration is less than the first threshold, and the location of the terminal device is fixed. Alternatively, the first relaxation condition may include another condition. This is not specifically limited, provided that the first relaxation condition can indicate that a state of the terminal device is stable, or indicate that a channel condition of the terminal device is good.

With reference to the third aspect or the first possible implementation of the third aspect, in a second possible implementation of the third aspect,
the first relaxation configuration includes third duration, the normal configuration includes fourth duration, the third duration is less than the fourth duration, and the third duration and the fourth duration each are duration of a paging transmission window; and/or
the first relaxation configuration includes a first quantity, the normal configuration includes a second quantity, the first quantity is less than the second quantity, and the first quantity and the second quantity each are a quantity of paging occasions that need to be monitored in a paging transmission window.

For example, the first relaxation configuration includes the third duration, the third duration may be less than the fourth duration, and the fourth duration is duration of a paging transmission window in the normal configuration. Duration of a paging transmission window is reduced, so that monitoring time of the terminal device can be reduced, to reduce power consumption of the terminal device and achieve an objective of "relaxation". For another example, the first relaxation configuration includes the first quantity, the first quantity may be less than the second quantity, and the second quantity is a quantity of paging occasions included in a paging transmission window in the normal configuration, or a quantity of paging occasions that need to be monitored by the terminal device in a paging transmission window in the normal configuration. A quantity of paging occasions that need to be monitored by the terminal device in a paging transmission window is reduced, to reduce power consumption of the terminal device and achieve an objective of "relaxation".

With reference to the second possible implementation of the third aspect, in a third possible implementation of the third aspect,
the first quantity of paging occasions are the first N paging occasions in a time domain sequence in a paging transmission window, and N is the first quantity; and/or
a first time interval is greater than a second time interval, the first time interval is a time interval between every two consecutive paging occasions in the first quantity of paging occasions, and the second time interval is a time interval between every two consecutive paging occasions in the second quantity of paging occasions.

The first quantity of paging occasions is a quantity of paging occasions included in a paging transmission window in the first relaxation configuration. For example, the first quantity of paging occasions may be the first N paging occasions or the last N paging occasions (in a time domain order) included in a paging transmission window in the normal configuration. In this way, the terminal device can implement continuous monitoring, to reduce power consumption caused by frequent switching between monitoring and non-monitoring. Alternatively, the first quantity of paging occasions may be any N paging occasions included in a paging transmission window in the normal configuration, and N is the first quantity. In other words, time domain positions of the first quantity of paging occasions are not limited in this embodiment of this application.

A time interval (for example, referred to as the first time interval) between every two consecutive paging occasions in time domain in the first quantity of paging occasions may be greater than a time interval (for example, referred to as the second time interval) between every two consecutive paging occasions in time domain in the second quantity of paging occasions, and the second quantity of paging occasions is a quantity of paging occasions included in a paging transmission window in the normal configuration. In other words, the time interval between every two of the first quantity of paging occasions is greater than the time interval between every two of the second quantity of paging occasions. When duration of a paging transmission window is fixed, it indicates that the first quantity is less than the second quantity. Therefore, the terminal device monitors the first quantity of paging occasions, and power consumption of the terminal device can be reduced.

With reference to any one of the third aspect or the first possible implementation of the third aspect to the third possible implementation of the third aspect, in a fourth possible implementation of the third aspect, the method further includes:
receiving indication information, where the indication information indicates that relaxed monitoring of a paging message is allowed.

For example, the network device may send the indication information to the terminal device, to indicate that relaxed monitoring of a paging message is allowed, or indicate that relaxed monitoring of a paging message is not allowed. Therefore, whether the terminal device can relax monitoring of a paging message is also within a control range of the network device as much as possible. For example, if the terminal device is in a state of relaxed monitoring a paging message, the network device may correspondingly adjust a paging message sending manner, to improve a paging success rate of the terminal device. For example, the indication information may explicitly indicate that relaxed monitoring of a paging message is allowed or relaxed monitoring of a paging message is not allowed. For example, the indication information occupies one or more bits (bit), and the one or more bits may indicate that relaxed monitoring of a paging message is allowed, or indicate that relaxed monitoring of a paging message is not allowed. For example, the indication information occupies 1 bit. If a value of the 1 bit is "1", it indicates that relaxed monitoring of a paging message is allowed, or if a value of the 1 bit is "0", it indicates that relaxed monitoring of a paging message is not allowed. Alternatively, if a value of the 1 bit is "0", it indicates that relaxed monitoring of a paging message is allowed, or if a value of the 1 bit is "1", it indicates that relaxed monitoring of a paging message is not allowed.

With reference to the fourth possible implementation of the third aspect, in a fifth possible implementation of the third aspect,
the indication information is carried in a broadcast message; or
the indication information is carried in an RRC message; or
the indication information is carried in a NAS message.

If the network device is a core network device, the core network device may send the indication information to the terminal device by using the NAS message. If the terminal device sends the request information to the network device by using a registration request message, the NAS message used by the core network device to send the indication information is, for example, a registration accept message. The registration accept message may be further used to configure an eDRX-related parameter for the terminal device, for example, configure an eDRX cycle. Alternatively, if the network device is an access network device, the access network device may send the indication information to the terminal device by using the RRC message or another message. For example, the RRC message is an RRC release message used to release the terminal device to an RRC inactive state or an RRC idle state. Alternatively, if the network device is an access network device, the access network device may also send the indication information by using the broadcast message. For example, if S601 is not performed, and the access network device is to send the indication information to a plurality of terminal devices in a cell, the access network device may send the indication information by using the broadcast message. For example, the broadcast message is a system message, or may be another message.

With reference to the fourth possible implementation of the third aspect or the fifth possible implementation of the third aspect, in a sixth possible implementation of the third aspect,
the method further includes: receiving configuration information, where the configuration information is used to configure the first relaxation condition and/or the first relaxation configuration corresponding to the first relaxation condition; or
the indication information is used to configure the first relaxation condition and/or the first relaxation configuration corresponding to the first relaxation condition.

For example, the indication information may explicitly indicate that relaxed monitoring of a paging message is allowed or relaxed monitoring of a paging message is not allowed. In this implementation, the network device may further send the configuration information, and the terminal device may receive the configuration information from the network device. The configuration information may be configured by the network device. Certainly, if the indication information indicates that relaxed monitoring of a paging message is allowed, the network device may send the configuration information; or if the indication information indicates that relaxed monitoring of a paging message is not allowed, the network device may not need to send the configuration information. Alternatively, the indication information may implicitly indicate that relaxed monitoring of a paging message is allowed. In this case, for example, the indication information is the configuration information. In this case, the configuration information may be referred to as configuration information, or may be referred to as indication information. The configuration information may implicitly indicate that relaxed monitoring of a paging message is allowed. In other words, the network device implicitly indicates, by sending the configuration information, that relaxed monitoring of a paging message is allowed. In this way, even if the terminal device can learn of a correspondence between a relaxation condition and a relaxation configuration, the terminal device does not need to send additional information as the indication information. This helps reduce signaling overheads.

With reference to any one of the third aspect or the first possible implementation of the third aspect to the sixth possible implementation of the third aspect, in a seventh possible implementation of the third aspect,
the configuration information further includes a correspondence between the first relaxation condition and the first relaxation configuration.

The configuration information may include one or more of the following: information about M relaxation conditions, information about N relaxation configurations, or a correspondence between the M relaxation conditions and the N relaxation configurations. For example, the configuration information includes the information about the M relaxation conditions; or the configuration information includes the information about the N relaxation configurations; or the configuration information includes the correspondence between the M relaxation conditions and the N relaxation configurations; or the configuration information includes the information about the M relaxation conditions and the information about the N relaxation configurations; or the configuration information includes the information about the M relaxation conditions and the correspondence between the M relaxation conditions and the N relaxation configurations; or the configuration information includes the information about the N relaxation configurations and the correspondence between the M relaxation conditions and the N relaxation configurations; or the configuration information includes the information about the M relaxation conditions, the information about the N relaxation configurations, and the correspondence between the M relaxation conditions and the N relaxation configurations. For example, M=1, that is, there is only one relaxation condition. In this case, the configuration information may include the relaxation condition and the N relaxation configurations, and does not need to include a correspondence between the relaxation condition and the N relaxation configurations, because the relaxation condition naturally corresponds to the N relaxation configurations. For another example, N=1, that is, there is only one relaxation configuration. In this case, the configuration information may include the M relaxation conditions and the relaxation configuration, and does not need to include a correspondence between the M relaxation conditions and the relaxation configuration, because the relaxation configuration naturally corresponds to all the M relaxation conditions. For still another example, M> 1 and N>1. In this case, the configuration information may include the M relaxation conditions, the N relaxation configurations, and the correspondence between the M relaxation conditions and the N relaxation configurations, so that the terminal device determines which relaxation condition corresponds to which relaxation configuration.

With reference to any one of the third aspect or the first possible implementation of the third aspect to the seventh possible implementation of the third aspect, in an eighth possible implementation of the third aspect, the method further includes:
sending request information, where the request information is used to request relaxed monitoring of a paging message.

For example, the terminal device may send the request information to the network device when the terminal device has a requirement for reducing power consumption, to request relaxed monitoring of a paging message. In this way, relaxed monitoring of a paging message by the terminal device can better meet the requirement of the terminal device, and the network device can also determine whether the terminal device is relaxing monitoring of a paging message.

With reference to the eighth possible implementation of the third aspect, in a ninth possible implementation of the third aspect,
the request information is carried in a NAS message; or
the request message is carried in an RRC message.

If the network device is a core network device, the terminal device may send the request information to the network device by using the NAS message. For example, the NAS message is a registration request message, or may be another NAS message. Alternatively, if the network device is an access network device, the terminal device may send the request information to the network device by using the RRC message or another message. For example, the RRC message is a message used by the terminal device to send assistance information to the network device, for example, a UE assistance information message. For example, the assistance information herein includes a configuration expected by the terminal device, or includes service information of the terminal device, or includes the configuration expected by the terminal device and the service information of the terminal device. The service information of the terminal device includes, for example, a parameter of a service that is being performed by the terminal device, for example, a type or required bandwidth of the service that is being performed by the terminal device. The configuration expected by the terminal device is, for example, an air interface configuration expected by the terminal device, for example, a slot format expected by the terminal device.

With reference to any one of the third aspect or the first possible implementation of the third aspect to the ninth possible implementation of the third aspect, in a tenth possible implementation of the third aspect, the method further includes:
determining that K relaxation conditions are not met, where the K relaxation conditions are all relaxation conditions or some relaxation conditions, the first relaxation condition is one of the K relaxation conditions, and K is an integer greater than or equal to 1; and
monitoring a paging message based on the normal configuration.

That the K relaxation conditions are not met herein means that none of the K relaxation conditions is met, or any one of the K relaxation conditions is not met. The K relaxation conditions include some relaxation conditions or all relaxation conditions in configured relaxation conditions. In this embodiment of this application, the terminal device may periodically or aperiodically determine whether the K relaxation conditions are met. For example, after determining that the first relaxation condition is met, the terminal device monitors a paging message based on the first relaxation configuration corresponding to the first relaxation condition. Then, if the terminal device determines that a second relaxation condition in the K relaxation conditions is met, the terminal device may monitor a paging message based on a second relaxation configuration corresponding to the second relaxation condition instead. Alternatively, after determining that the K relaxation conditions are not met, that is, none of the K relaxation conditions is met, the terminal device may resume normal monitoring of a paging message. In other words, the terminal device may monitor a paging message based on the normal configuration, to reduce a probability of missed detection of a paging message.

With reference to any one of the third aspect or the first possible implementation of the third aspect to the tenth possible implementation of the third aspect, in an eleventh possible implementation of the third aspect, the first relaxation condition is one of the K relaxation conditions, the K relaxation conditions further include the second relaxation condition, the second relaxation condition corresponds to the second relaxation configuration, and the first relaxation configuration is different from the second relaxation configuration. K is an integer greater than or equal to 1.

There may be a plurality of relaxation conditions, and relaxation configurations corresponding to different relaxation conditions may be the same or different, which is flexible. For example, the K relaxation conditions include the first relaxation condition and the second relaxation condition, and the second relaxation condition corresponds to the second relaxation configuration. The first relaxation configuration and the second relaxation configuration may be a same configuration, or the first relaxation configuration and the second relaxation configuration may be different configurations.

According to a fourth aspect, a fourth communication method is provided. The method includes: determining to allow a terminal device to relax monitoring a paging message; and sending indication information, where the indication information indicates that relaxed monitoring of a paging message is allowed.

The method may be performed by a fourth communications apparatus. The fourth communications apparatus may be a communications device, or may be a communications apparatus, for example, a chip, that can support a communications device in implementing a function required in the method. For example, the fourth communications apparatus is a network device, a chip disposed in the network device and configured to implement a function of the network device, or another component configured to implement the function of the network device. The following description process uses an example in which the fourth communications apparatus is the network device. For example, the network device is a core network device or an access network device.

For example, if the terminal device further sends capability information of the terminal device to the network device, or the network device obtains the capability information of the terminal device based on registration information of the terminal device, and the capability information of the terminal device indicates that the terminal device has a power saving requirement, the network device may determine to allow the terminal device to relax monitoring of a paging message, and the indication information may indicate that relaxed monitoring of a paging message is allowed. If the capability information of the terminal device indicates that the terminal device has no power saving requirement, the network device may determine not to allow the terminal device to relax monitoring of a paging message, and the indication information may indicate that relaxed monitoring of a paging message is not allowed. Alternatively, the network device may determine, in another manner, whether to allow the terminal device to relax monitoring of a paging message. An indication of the network device is used, so that behavior of the terminal device is within a control range of the network device as much as possible. For example, the indication information indicates that relaxed monitoring of a paging message is allowed. If a corresponding relaxation condition is met, the terminal device may monitor a paging message based on a relaxation configuration corresponding to the relaxation condition. For example, if a first relaxation condition is met, the terminal device may monitor a paging message based on a first relaxation configuration corresponding to the first relaxation condition. A quantity of times that the terminal device monitors a paging message in the first relaxation configuration is less than a quantity of times that the terminal device monitors to a paging message in a normal configuration. Because the quantity of times that the terminal device monitors a paging message is reduced, power consumption of the terminal device can be reduced. In addition, whether a corresponding relaxation condition is met can be determined by the terminal device, and does not need to be indicated by the network device, so that a determining manner is more flexible.

With reference to the fourth aspect, in a first possible implementation of the fourth aspect,
the indication information is carried in a broadcast message; or
the indication information is carried in an RRC message; or
the indication information is carried in a NAS message.

With reference to the fourth aspect or the first possible implementation of the fourth aspect, in a second possible implementation of the fourth aspect,
the method further includes: sending configuration information, where the configuration information is used to configure the first relaxation condition and/or the first relaxation configuration corresponding to the first relaxation condition; or
the indication information is used to configure the first relaxation condition and/or the first relaxation configuration corresponding to the first relaxation condition.

The first relaxation condition is a condition for relaxed monitoring of a paging message, and the quantity of times that the terminal device monitors a paging message in the relaxation configuration corresponding to the first relaxation condition is less than the quantity of times that the terminal device monitors a paging message in the normal configuration.

With reference to the fourth aspect, the first possible implementation of the fourth aspect, or the second possible implementation of the fourth aspect, in a third possible implementation of the fourth aspect, the configuration information further includes a correspondence between the first relaxation condition and the first relaxation configuration.

With reference to the fourth aspect, the first possible implementation of the fourth aspect, the second possible implementation of the fourth aspect, or the third possible implementation of the fourth aspect, in a fourth possible implementation of the fourth aspect, the method further includes:
receiving request information from the terminal device, where the request information is used to request relaxed monitoring of a paging message.

With reference to the fourth possible implementation of the fourth aspect, in a fifth possible implementation of the fourth aspect,
the request information is carried in a NAS message; or
the request message is carried in an RRC message.

For technical effects brought by the fourth aspect or the possible implementations of the fourth aspect, refer to the descriptions of the technical effects brought by the third aspect or the corresponding implementations of the third aspect.

According to a fifth aspect, a communications apparatus is provided. For example, the communications apparatus is the first communications apparatus described above. The first communications apparatus is configured to perform the method according to any one of the first aspect or the possible implementations of the first aspect. Specifically, the first communications apparatus may include modules configured to perform the method according to any one of the first aspect or the possible implementations of the first aspect. For example, the first communications apparatus includes a processing module, and optionally, may further include a transceiver module. For example, the transceiver module may include a sending module and a receiving module. The sending module and the receiving module may be different function modules, or may be a same function module but can implement different functions. For example, the first communications apparatus is a communications device, or is a chip or another component disposed in the communications device. For example, the communications device is a terminal device. The following uses an example in which the first communications apparatus is a terminal device. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module but can implement different functions. If the first communications apparatus is the communications device, the transceiver is implemented, for example, as an antenna, a feeder, and a codec in the communications device. Alternatively, if the first communications apparatus is the chip disposed in the communications device, the transceiver (or the transmitter and the receiver) is, for example, a communications interface in the chip. The communications interface is connected to a radio frequency transceiver component in the communications device, to send and receive information through the radio frequency transceiver component. In a description process of the fifth aspect, an example in which the first communications apparatus is the terminal device including the processing module and the transceiver module is still used for description. The processing module is configured to determine assistance information, where the assistance information is used to determine a paging parameter configured for the terminal device.

The transceiver module is configured to send the assistance information.

With reference to the fifth aspect, in a first possible implementation of the fifth aspect, the assistance information includes one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

With reference to the fifth aspect or the first possible implementation of the fifth aspect, in a second possible implementation of the fifth aspect,
the transceiver module is further configured to receive first configuration information and/or second configuration information; and
the processing module is further configured to monitor a paging message based on third configuration information, where the third configuration information is determined based on received configuration information.

With reference to the second possible implementation of the fifth aspect, in a third possible implementation of the fifth aspect,
the first configuration information includes first duration and/or a first quantity, the second configuration information includes second duration and/or a second quantity, the first duration and the second duration each are duration of a paging transmission window, and the first quantity and the second quantity each are a quantity of paging occasions that need to be monitored in a paging transmission window.

With reference to the third possible implementation of the fifth aspect, in a fourth possible implementation of the fifth aspect,
the third configuration information includes third duration, the third duration is a larger value or a smaller value in the first duration and the second duration, and the third duration is duration of a paging transmission window; and/or
the third configuration information includes a third quantity, the third quantity is a larger value or a smaller value in the first quantity and the second quantity, and the third quantity is a quantity of paging occasions that need to be monitored in a paging transmission window.

For technical effects brought by the fifth aspect or the possible implementations of the fifth aspect, refer to the descriptions of the technical effects brought by the first aspect or the corresponding implementations of the first aspect.

According to a sixth aspect, a communications apparatus is provided. For example, the communications apparatus is the second communications apparatus described above. The second communications apparatus is configured to perform the method according to any one of the second aspect or the possible implementations of the second aspect. Specifically, the second communications apparatus may include modules configured to perform the method according to any one of the second aspect or the possible implementations of the second aspect. For example, the second communications apparatus includes a processing module, and optionally, may further include a transceiver module. For example, the transceiver module may include a sending module and a receiving module. The sending module and the receiving module may be different function modules, or may be a same function module but can implement different functions. For example, the second communications apparatus is a communications device, or is a chip or another component disposed in the communications device. For example, the communications device is a network device. For example, the network device is a core network device or an access network device. The following uses an example in which the second communications apparatus is the network device. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module but can implement different functions. If the second communications apparatus is the communications device, the transceiver is implemented, for example, as an antenna, a feeder, and a codec in the communications device. Alternatively, if the second communications apparatus is the chip disposed in the communications device, the transceiver (or the transmitter and the receiver) is, for example, a communications interface in the chip. The communications interface is connected to a radio frequency transceiver component in the communications device, to send and receive information through the radio frequency transceiver component. In a description process of the sixth aspect, an example in which the second communications apparatus is the network device including the processing module and the transceiver module is still used for description. The transceiver module is configured to receive assistance information, where the assistance information is used to determine a paging parameter configured for a terminal device.

The processing module is configured to determine first configuration information based on the assistance information, where the first configuration information is used by the terminal device to monitor a paging message.

The transceiver module is further configured to send the first configuration information.

With reference to the sixth aspect, in a first possible implementation of the sixth aspect, the transceiver module is further configured to:
send a paging message based on the first configuration information; or
receive second configuration information, determine third configuration information based on the first configuration information and the second configuration information, and send a paging message based on the third configuration information.

With reference to the first possible implementation of the sixth aspect, in a second possible implementation of the sixth aspect, the first configuration information includes first duration and/or a first quantity, the second configuration information includes second duration and/or a second quantity, the first duration and the second duration each are duration of a paging transmission window, and the first quantity and the second quantity each are a quantity of paging occasions that need to be monitored in a paging transmission window.

With reference to the second possible implementation of the sixth aspect, in a third possible implementation of the sixth aspect,
the third configuration information includes third duration, the third duration is a larger value or a smaller value in the first duration and the second duration, and the third duration is duration of a paging transmission window; and/or
the third configuration information includes a third quantity, the third quantity is a larger value or a smaller value in the first quantity and the second quantity, and the third quantity is a quantity of paging occasions that need to be monitored in a paging transmission window.

With reference to any one of the sixth aspect or the first possible implementation of the sixth aspect to the third possible implementation of the sixth aspect, in a fourth possible implementation of the sixth aspect, the assistance information includes one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

With reference to any one of the sixth aspect or the first possible implementation of the sixth aspect to the fourth possible implementation of the sixth aspect, in a fifth possible implementation of the sixth aspect, the network device is a core network device, and the transceiver module is further configured to send the assistance information and the first configuration information to an access network device serving the terminal device.

With reference to any one of the sixth aspect or the first possible implementation of the sixth aspect to the fourth possible implementation of the sixth aspect, in a sixth possible implementation of the sixth aspect, the network device is an access network device, and the transceiver module is further configured to send the first relaxation configuration to a core network device serving the terminal device.

For technical effects brought by the sixth aspect or the optional implementations of the sixth aspect, refer to the descriptions of the technical effects brought by the second aspect or the corresponding implementations of the second aspect.

According to a seventh aspect, a communications apparatus is provided. For example, the communications apparatus is the third communications apparatus described above. The third communications apparatus is configured to perform the method according to any one of the third aspect or the possible implementations of the third aspect. Specifically, the third communications apparatus may include modules configured to perform the method according to any one of the third aspect or the possible implementations of the third aspect. For example, the third communications apparatus includes a processing module, and optionally, may further include a transceiver module. For example, the transceiver module may include a sending module and a receiving module. The sending module and the receiving module may be different function modules, or may be a same function module but can implement different functions. For example, the third communications apparatus is a communications device, or is a chip or another component disposed in the communications device. For example, the communications device is a terminal device. The following uses an example in which the third communications apparatus is the terminal device. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module but can implement different functions. If the third communications apparatus is the communications device, the transceiver is implemented, for example, as an antenna, a feeder, and a codec in the communications device. Alternatively, if the third communications apparatus is the chip disposed in the communications device, the transceiver (or the transmitter and the receiver) is, for example, a communications interface in the chip. The communications interface is connected to a radio frequency transceiver component in the communications device, to send and receive information through the radio frequency transceiver component. In a description process of the seventh aspect, an example in which the third communications apparatus is the terminal device including the processing module and the transceiver module is still used for description. The processing module is configured to determine that a first relaxation condition is met, where the first relaxation condition is a condition for relaxed monitoring of a paging message.

The transceiver module is configured to monitor a paging message based on a first relaxation configuration corresponding to the first relaxation condition, where a quantity of times that the terminal device monitors a paging message in the relaxation configuration corresponding to the first relaxation condition is less than a quantity of times that the terminal device monitors a paging message in a normal configuration.

With reference to the seventh aspect, in a first possible implementation of the seventh aspect, the first relaxation condition includes one or more of the following:
a change value of a measured value obtained by measuring a reference signal in first duration is less than a first threshold;
a measured value obtained by measuring a reference signal in second duration is greater than a second threshold; or
a location of the terminal device is fixed.

With reference to the seventh aspect or the first possible implementation of the seventh aspect, in a second possible implementation of the seventh aspect,
the first relaxation configuration includes third duration, the normal configuration includes fourth duration, the third duration is less than the fourth duration, and the third duration and the fourth duration each are duration of a paging transmission window; and/or
the first relaxation configuration includes a first quantity, the normal configuration includes a second quantity, the first quantity is less than the second quantity, and the first quantity and the second quantity each are a quantity of paging occasions that need to be monitored in a paging transmission window.

With reference to the second possible implementation of the seventh aspect, in a third possible implementation of the seventh aspect,
the first quantity of paging occasions are the first N paging occasions in a time domain sequence in a paging transmission window, and N is the first quantity; and/or
a first time interval is greater than a second time interval, the first time interval is a time interval between every two consecutive paging occasions in the first quantity of paging occasions, and the second time interval is a time interval between every two consecutive paging occasions in the second quantity of paging occasions.

With reference to any one of the seventh aspect or the first possible implementation of the seventh aspect to the third possible implementation of the seventh aspect, in a fourth possible implementation of the seventh aspect, the transceiver module is further configured to receive indication information, where the indication information indicates that relaxed monitoring of a paging message is allowed.

With reference to the fourth possible implementation of the seventh aspect, in a fifth possible implementation of the seventh aspect,
the indication information is carried in a broadcast message; or
the indication information is carried in an RRC message; or
the indication information is carried in a NAS message.

With reference to the fourth possible implementation of the seventh aspect or the fifth possible implementation of the seventh aspect, in a sixth possible implementation of the seventh aspect,
the transceiver module is further configured to receive configuration information, where the configuration information is used to configure the first relaxation condition and/or the first relaxation configuration corresponding to the first relaxation condition; or
the indication information is used to configure the first relaxation condition and/or the first relaxation configuration corresponding to the first relaxation condition.

With reference to any one of the seventh aspect or the first possible implementation of the seventh aspect to the sixth possible implementation of the seventh aspect, in a seventh possible implementation of the seventh aspect, the configuration information further includes a correspondence between the first relaxation condition and the first relaxation configuration.

With reference to any one of the seventh aspect or the first possible implementation of the seventh aspect to the seventh possible implementation of the seventh aspect, in an eighth possible implementation of the seventh aspect, the transceiver module is further configured to send request information, where the request information is used to request relaxed monitoring of a paging message.

With reference to the eighth possible implementation of the seventh aspect, in a ninth possible implementation of the seventh aspect,
the request information is carried in a NAS message; or
the request message is carried in an RRC message.

With reference to any one of the seventh aspect or the first possible implementation of the seventh aspect to the ninth possible implementation of the seventh aspect, in a tenth possible implementation of the seventh aspect,
the processing module is further configured to determine that K relaxation conditions are not met, where the K relaxation conditions are all relaxation conditions or some relaxation conditions, the first relaxation condition is one of the K relaxation conditions, and K is an integer greater than or equal to 1; and
the transceiver module is further configured to monitor a paging message based on the normal configuration.

With reference to any one of the seventh aspect or the first possible implementation of the seventh aspect to the tenth possible implementation of the seventh aspect, in an eleventh possible implementation of the seventh aspect, the first relaxation condition is one of the K relaxation conditions, the K relaxation conditions further include the second relaxation condition, the second relaxation condition corresponds to the second relaxation configuration, and the first relaxation configuration is different from the second relaxation configuration. K is an integer greater than or equal to 1.

For technical effects brought by the seventh aspect or the possible implementations of the seventh aspect, refer to the descriptions of the technical effects brought by the third aspect or the corresponding implementations of the third aspect.

According to an eighth aspect, a communications apparatus is provided. For example, the communications apparatus is the fourth communications apparatus described above. The fourth communications apparatus is configured to perform the method according to any one of the fourth aspect or the possible implementations. Specifically, the fourth communications apparatus may include modules configured to perform the method according to any one of the fourth aspect or the possible implementations, for example, include a processing module and a transceiver module. For example, the transceiver module may include a sending module and a receiving module. The sending module and the receiving module may be different function modules, or may be a same function module but can implement different functions. For example, the fourth communications apparatus is a communications device, or is a chip or another component disposed in the communications device. For example, the communications device is a network device. For example, the network device is a core network device or an access network device. The following uses an example in which the fourth communications apparatus is the network device. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module but can implement different functions. If the fourth communications apparatus is the communications device, the transceiver is implemented, for example, as an antenna, a feeder, and a codec in the communications device. Alternatively, if the fourth communications apparatus is the chip disposed in the communications device, the transceiver (or the transmitter and the receiver) is, for example, a communications interface in the chip. The communications interface is connected to a radio frequency transceiver component in the communications device, to send and receive information through the radio frequency transceiver component. In a description process of the eighth aspect, an example in which the fourth communications apparatus is the network device including the processing module and the transceiver module is still used for description. The processing module is configured to determine to allow a terminal device to relax monitoring of a paging message.

The transceiver module is configured to send indication information, where the indication information indicates that relaxed monitoring of a paging message is allowed.

With reference to the eighth aspect, in a first possible implementation of the eighth aspect,
the indication information is carried in a broadcast message; or
the indication information is carried in an RRC message; or
the indication information is carried in a NAS message.

With reference to the eighth aspect or the first possible implementation of the eighth aspect, in a second possible implementation of the eighth aspect,
the transceiver module is further configured to send configuration information, where the configuration information is used to configure a first relaxation condition and/or a first relaxation configuration corresponding to the first relaxation condition; or
the indication information is used to configure the first relaxation condition and/or the first relaxation configuration corresponding to the first relaxation condition.

The first relaxation condition is a condition for relaxed monitoring of a paging message, and a quantity of times that the terminal device monitors a paging message in the relaxation configuration corresponding to the first relaxation condition is less than a quantity of times that the terminal device monitors a paging message in a normal configuration.

With reference to the eighth aspect, the first possible implementation of the eighth aspect, or the second possible implementation of the eighth aspect, in a third possible implementation of the eighth aspect, the configuration information further includes a correspondence between the first relaxation condition and the first relaxation configuration.

With reference to the eighth aspect, the first possible implementation of the eighth aspect, the second possible implementation of the eighth aspect, or the third possible implementation of the eighth aspect, in a fourth possible implementation of the eighth aspect, the transceiver module is further configured to receive request information from the terminal device, where the request information is used to request relaxed monitoring of a paging message.

With reference to the fourth possible implementation of the eighth aspect, in a fifth possible implementation of the eighth aspect,
the request information is carried in a NAS message; or
the request message is carried in an RRC message.

For technical effects brought by the eighth aspect or the possible implementations of the eighth aspect, refer to the descriptions of the technical effects brought by the fourth aspect or the corresponding implementations of the fourth aspect.

According to a ninth aspect, a communications apparatus is provided. The communications apparatus is, for example, the first communications apparatus described above. The communications apparatus includes one or more processors, and optionally, may further include a communications interface. The communications interface may be configured to communicate with another apparatus or device. Optionally, the first communications apparatus may further include one or more memories, configured to store computer instructions. The one or more processors and the one or more memories are coupled to each other, and are configured to implement the method described in the first aspect or the possible implementations. Alternatively, the first communications apparatus may not include the memory, and at least one memory may be located outside the first communications apparatus. The one or more processors, the one or more memories, and the communications interface are coupled to each other, and are configured to implement the method described in the first aspect or the possible implementations. For example, the first communications apparatus may further include one or more computer programs, the one or more computer programs are stored in the one or more memories, and the one or more computer programs include computer instructions. When the one or more processors execute the computer instructions stored in the one or more memories, the first communications apparatus is enabled to perform the method in any one of the first aspect or the possible implementations. For example, the first communications apparatus is a communications device, or is a chip or another component disposed in the communications device. For example, the communications device is a terminal device.

If the first communications apparatus is the communications device, the communications interface is implemented, for example, as a transceiver (or a transmitter and a receiver) in the communications device, and the transceiver is implemented, for example, as an antenna, a feeder, and a codec in the communications device. Alternatively, if the first communications apparatus is the chip disposed in the communications device, the communications interface is, for example, an input/output interface such as an input/output pin in the chip. The communications interface is connected to a radio frequency transceiver component in the communications device, to send and receive information through the radio frequency transceiver component.

According to a tenth aspect, a communications apparatus is provided. The communications apparatus is, for example, the second communications apparatus described above. The communications apparatus includes one or more processors, and optionally, may further include a communications interface. The communications interface may be configured to communicate with another apparatus or device. Optionally, the second communications apparatus may further include one or more memories, configured to store computer instructions. The one or more processors and the one or more memories are coupled to each other, and are configured to implement the method described in the second aspect or the possible implementations. Alternatively, the second communications apparatus may not include the memory, and one or more memories may be located outside the second communications apparatus. The one or more processors, the one or more memories, and the communications interface are coupled to each other, and are configured to implement the method described in the second aspect or the possible implementations. For example, the second communications apparatus may further include one or more computer programs, the one or more computer programs are stored in the one or more memories, and the one or more computer programs include computer instructions. When the one or more processors execute the computer instructions stored in the one or more memories, the second communications apparatus is enabled to perform the method in any one of the second aspect or the possible implementations. For example, the second communications apparatus is a communications device, or is a chip or another component disposed in the communications device. For example, the communications device is a network device. For example, the network device is a core network device or an access network device.

If the second communications apparatus is the communications device, the communications interface is implemented, for example, as a transceiver (or a transmitter and a receiver) in the communications device, and the transceiver is implemented, for example, as an antenna, a feeder, and a codec in the communications device. Alternatively, if the second communications apparatus is the chip disposed in the communications device, the communications interface is, for example, an input/output interface such as an input/output pin in the chip. The communications interface is connected to a radio frequency transceiver component in the communications device, to send and receive information through the radio frequency transceiver component.

According to an eleventh aspect, a communications apparatus is provided. The communications apparatus is, for example, the third communications apparatus described above. The communications apparatus includes one or more processors, and optionally, may further include a communications interface. The communications interface may be configured to communicate with another apparatus or device. Optionally, the third communications apparatus may further include one or more memories, configured to store computer instructions. The one or more processors and the one or more memories are coupled to each other, and are configured to implement the method described in the third aspect or the possible implementations of the third aspect. Alternatively, the third communications apparatus may not include the memory, and one or more memories may be located outside the third communications apparatus. The one or more processors, the one or more memories, and the communications interface are coupled to each other, and are configured to implement the method described in the third aspect or the possible implementations. For example, the third communications apparatus may further include one or more computer programs, the one or more computer programs are stored in the one or more memories, and the one or more computer programs include computer instructions. When the one or more processors execute the computer instructions stored in the one or more memories, the third communications apparatus is enabled to perform the method in any one of the third aspect or the possible implementations. For example, the third communications apparatus is a communications device, or is a chip or another component disposed in the communications device. For example, the communications device is a terminal device.

If the third communications apparatus is the communications device, the communications interface is implemented, for example, as a transceiver (or a transmitter and a receiver) in the communications device, and the transceiver is implemented, for example, as an antenna, a feeder, and a codec in the communications device. Alternatively, if the third communications apparatus is the chip disposed in the communications device, the communications interface is, for example, an input/output interface such as an input/output pin in the chip. The communications interface is connected to a radio frequency transceiver component in the communications device, to send and receive information through the radio frequency transceiver component.

According to a twelfth aspect, a communications apparatus is provided. The communications apparatus is, for example, the fourth communications apparatus described above. The communications apparatus includes one or more processors, and optionally, may further include a communications interface. The communications interface may be configured to communicate with another apparatus or device. Optionally, the fourth communications apparatus may further include one or more memories, configured to store computer instructions. The one or more processors and the one or more memories are coupled to each other, and are configured to implement the method described in the fourth aspect or the possible implementations. Alternatively, the fourth communications apparatus may not include the memory, and one or more memories may be located outside the fourth communications apparatus. The one or more processors, the one or more memories, and the communications interface are coupled to each other, and are configured to implement the method described in the fourth aspect or the possible implementations. For example, the fourth communications apparatus may further include one or more computer programs, the one or more computer programs are stored in the one or more memories, and the one or more computer programs include computer instructions. When the one or more processors execute the computer instructions stored in the one or more memories, the fourth communications apparatus is enabled to perform the method in any one of the fourth aspect or the possible implementations. For example, the fourth communications apparatus is a communications device, or is a chip or another component disposed in the communications device. For example, the communications device is a network device. For example, the network device is a core network device or an access network device.

If the fourth communications apparatus is the communications device, the communications interface is implemented, for example, as a transceiver (or a transmitter and a receiver) in the communications device, and the transceiver is implemented, for example, as an antenna, a feeder, and a codec in the communications device. Alternatively, if the fourth communications apparatus is the chip disposed in the communications device, the communications interface is, for example, an input/output interface such as an input/output pin in the chip. The communications interface is connected to a radio frequency transceiver component in the communications device, to send and receive information through the radio frequency transceiver component.

According to a thirteenth aspect, a first communications system is provided. The first communications system includes the communications apparatus according to the fifth aspect or the communications apparatus according to the ninth aspect, and includes the communications apparatus according to the sixth aspect or the communications apparatus according to the tenth aspect.

According to a fourteenth aspect, a second communications system is provided. The second communications system includes the communications apparatus according to the seventh aspect or the communications apparatus according to the eleventh aspect, and includes the communications apparatus according to the eighth aspect or the communications apparatus according to the twelfth aspect.

According to a fifteenth aspect, a computer-readable storage medium is provided. The computer-readable storage medium stores a computer program. When the computer program is run on a computer, the computer is enabled to perform the method according to any one of the first aspect or the possible implementations of the first aspect.

According to a sixteenth aspect, a computer-readable storage medium is provided. The computer-readable storage medium stores a computer program. When the computer program is run on a computer, the computer is enabled to perform the method according to any one of the second aspect or the possible implementations of the second aspect.

According to a seventeenth aspect, a computer-readable storage medium is provided. The computer-readable storage medium stores a computer program. When the computer program is run on a computer, the computer is enabled to perform the method according to any one of the third aspect or the possible implementations of the third aspect.

According to an eighteenth aspect, a computer-readable storage medium is provided. The computer-readable storage medium stores a computer program. When the computer program is run on a computer, the computer is enabled to perform the method according to any one of the fourth aspect or the possible implementations of the fourth aspect.

According to a nineteenth aspect, a computer program product including instructions is provided. The computer program product is used to store a computer program. When the computer program is run on a computer, the computer is enabled to perform the method according to any one of the first aspect or the possible implementations of the first aspect.

According to a twentieth aspect, a computer program product including instructions is provided. The computer program product is used to store a computer program. When the computer program is run on a computer, the computer is enabled to perform the method according to any one of the second aspect or the possible implementations of the second aspect.

According to a twenty-first aspect, a computer program product including instructions is provided. The computer program product is used to store a computer program. When the computer program is run on a computer, the computer is enabled to perform the method according to any one of the third aspect or the possible implementations of the third aspect.

According to a twenty-second aspect, a computer program product including instructions is provided. The computer program product is used to store a computer program. When the computer program is run on a computer, the computer is enabled to perform the method according to any one of the fourth aspect or the possible implementations of the fourth aspect.

In embodiments of this application, the network device may determine, based on the assistance information, the paging parameter configured for the terminal device. The assistance information may indicate a state of the terminal device and the like, so that the paging parameter configured by the network device can meet an actual requirement of the terminal device.

### BRIEF DESCRIPTION OF DRAWINGS

FIG. 1A shows an example in which a terminal device receives a paging message based on an eDRX cycle;
FIG. 1B shows another example in which a terminal device receives a paging message based on an eDRX cycle;
FIG. 2 is a schematic diagram of an application scenario according to an embodiment of this application;
FIG. 3 is a flowchart of a first communication method according to an embodiment of this application;
FIG. 4 is a flowchart of a second communication method according to an embodiment of this application;
FIG. 5 is a flowchart of a third communication method according to an embodiment of this application;
FIG. 6 is a flowchart of a fourth communication method according to an embodiment of this application;
FIG. 7A is a schematic diagram of remaining power of a terminal device;
FIG. 7B is a schematic diagram of remaining power of a terminal device after a period of time when a method provided in embodiments of this application is not used;
FIG. 7C is a schematic diagram of remaining power of a terminal device after a period of time when a method provided in embodiments of this application is used;
FIG. 8 is a schematic block diagram of a first terminal device according to an embodiment of this application;
FIG. 9 is a schematic block diagram of a first network device according to an embodiment of this application;
FIG. 10 is a schematic block diagram of a second terminal device according to an embodiment of this application;
FIG. 11 is a schematic block diagram of a second network device according to an embodiment of this application;
FIG. 12 is a schematic block diagram of a communications apparatus according to an embodiment of this application;
FIG. 13 is another schematic block diagram of a communications apparatus according to an embodiment of this application;
FIG. 14 is still another schematic block diagram of a communications apparatus according to an embodiment of this application; and
FIG. 15 is yet another schematic block diagram of a communications apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) Terminal device: The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network over a radio access network (radio access network, RAN), and exchange a voice or data with the RAN, or interact a voice and data with the RAN. The terminal device may include user equipment (user equipment, UE), a wireless terminal device, a mobile terminal device, a device-to-device (device-to-device, D2D) communication terminal device, a vehicle to everything (vehicle to everything, V2X) terminal device, a machine-to-machine/machine type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus, For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is more than a hardware device, and is used to implement powerful functions through software support, data exchange, and cloud interaction. In a broad sense, the wearable intelligent device includes a full-featured and large-sized device that can implement all or some of functions without depending on a smartphone, for example, a smart watch or smart glasses, and includes a device that focuses on only one type of application function and needs to collaboratively work with another device such as the smartphone, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the terminal device is the apparatus for implementing the function of the terminal.

(2) Network device: The network device includes, for example, an access network (access network, AN) device such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between a terminal device and a remaining part of the access network, where the remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolutional NodeB) in an LTE system or a long term evolution-advanced (long term evolution-advanced, LTE-A) system, or may include a next generation NodeB (next generation NodeB, gNB) in a fifth generation (the 5th generation, 5G) NR system (also referred to as an NR system for short), or may include a centralized unit (centralized unit, CU) and a distributed unit (distributed unit, DU) in a cloud radio access network (cloud radio access network, Cloud RAN) system. This is not limited in embodiments of this application.

The network device may further include a core network device. In embodiments of this application, the core network device includes, for example, an access and mobility management function (access and mobility management function, AMF) or a user plane function (user plane function, UPF) in a 5G system, or includes a mobility management entity (mobility management entity, MME) in a 4G system.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the network device is the apparatus for implementing the function of the network device.

(3) DRX: Simply speaking, in a DRX mechanism, a terminal device may periodically enter a sleep state, and does not need to monitor a physical downlink control channel (physical downlink control channel, PDCCH).

(4) Extended discontinuous reception (extended DRX, eDRX): Compared with DRX, eDRX has a longer DRX cycle, that is, a terminal device may periodically "sleep" for a longer time and "wake up" again. One eDRX cycle includes one paging transmission window (paging transmission window, PTW), and the PTW includes one or more POs. In one eDRX cycle, the terminal device "wakes up" on one or more POs in a PTW to monitor a PDCCH, and does not need to monitor the PDCCH in a period of time of "sleep".

(5) RRC state: A terminal device has three RRC states: an RRC connected (connected) state, an RRC idle state, and an RRC inactive state.

RRC connected state (which may also be referred to as a connected state for short, where in this specification, the "connected state" and the "RRC connected state" are a same concept, and may be interchanged): The terminal device establishes an RRC connection to a network, and may transmit data.

RRC idle state (which may also be referred to as an idle state for short, where in this specification, the "idle state" and the "RRC idle state" are a same concept, and may be interchanged): The terminal device does not establish an RRC connection to a network, and a base station does not store a context of the terminal device. If the terminal device needs to enter the RRC connected state from the RRC idle state, the terminal device needs to initiate an RRC connection establishment procedure.

RRC inactive state (which may also be referred to as an inactive state for short, where in this specification, the "inactive state" and the "RRC inactive state" are a same concept, and may be interchanged): The terminal device previously enters the RRC connected state through an anchor base station. Then, the anchor base station releases the RRC connection, but stores the context of the terminal device. If the terminal device needs to enter the RRC connected state from the RRC inactive state again, the terminal device needs to initiate an RRC connection resume procedure (or referred to as an RRC connection reestablishment procedure) through a base station on which the terminal device currently camps. Because the terminal device may be in a moving state, the base station on which the terminal device currently camps and the anchor base station of the terminal device may be a same base station, or may be different base stations. Compared with the RRC establishment procedure, the RRC resume procedure has a shorter delay and fewer signaling overheads. However, the base station needs to store the context of the terminal device. This causes storage overheads of the base station.

(6) The terms "system" and "network" in embodiments of this application may be used interchangeably. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression indicates any combination of the items, and includes any combination of singular items or plural items. For example, at least one of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, first configuration information and second configuration information are merely used to distinguish between different configuration information, but do not indicate different content, priorities, importance degrees, or the like of the two pieces of configuration information.

The foregoing describes some noun concepts used in embodiments of this application. The following describes technical features of embodiments of this application.

A DRX mechanism in an LTE system is still used in a 5G NR technology. The DRX mechanism includes a DRX cycle. A terminal device in an RRC connected state periodically "wakes up" for a period of time in the DRX cycle. The time in which the terminal device "wakes up" is referred to as an on duration (on duration) time period. In the DRX cycle except the on duration time period, the terminal device may keep in a "sleep" state, to reduce power consumption. In addition, when the terminal device is in an RRC idle state or an RRC inactive state, if a core network or a base station needs to send downlink data to the terminal device, for example, a call needs to be made to the terminal device, or downlink data needs to be sent to the terminal device, the core network or the base station first sends a paging message to the terminal device to page the terminal device. After receiving the paging message, the terminal device initiates an RRC connection establishment procedure to receive the downlink data.

The terminal device in the RRC idle state or the RRC inactive state "wakes up" only on a PO of the terminal device to receive a paging message. The terminal device first receives, on the PO of the terminal device, downlink control information (downlink control information, DCI) used to indicate the paging message, and the DCI may be sent on a physical downlink control channel (physical downlink control channel, PDCCH). The DCI may also be referred to as paging control information, and the paging control information is used to indicate time-frequency resources for sending the paging message. After receiving the paging control information, the terminal device receives the paging message. If the paging message carries an ID of the terminal device, it indicates that the terminal device is paged, and the terminal device needs to initiate an RRC connection establishment procedure to access the base station, to receive the downlink data. Alternatively, if the paging message does not carry the ID of the terminal device, it indicates that the terminal device is not paged, and the terminal device may continue to "sleep" and "wake up" on a next PO.

If a terminal device configured with DRX is in an RRC idle state or an RRC inactive state, the terminal device "wakes up" on a PO included in the DRX cycle to receive a paging message.

To further reduce power consumption, an eDRX mechanism is introduced to the DRX mechanism, and eDRX is equivalent to extending the DRX cycle to a larger value. In other words, the terminal device may "sleep" for a longer time and "wake up" again. Because the terminal device "sleeps" for a longer time in the eDRX mechanism, higher reliability needs to be ensured each time the terminal device "wakes up" to receive a paging message, to avoid a delay caused by sleeping for one more eDRX cycle. Therefore, a PTW is introduced to eDRX. One eDRX cycle includes one PTW, and the PTW includes one or more POs. In one eDRX cycle, the terminal device "wakes up" on one or more POs in a PTW to receive a paging message. The terminal device may first monitor paging control information on each PO. If the paging control information is detected, the terminal device may continue to monitor a paging message on the PO. If the paging message includes an ID of the terminal device, the terminal device does not need to monitor remaining POs in the PTW. If the paging message does not include the ID of the terminal device, the terminal device monitors the paging control information on a next PO, and so on, until a paging message including the ID of the terminal device is successfully received or the PTW ends. If the terminal device does not detect the paging control information on a PO, the terminal device does not monitor the paging message on the PO, but monitors the paging control information on a next PO, and so on, until a paging message including the ID of the terminal device is successfully received or the PTW ends.

Currently, a core network device configures a paging parameter for the terminal device, for example, configures PTW duration. The terminal device may monitor a paging message based on the paging parameter configured by the core network device. However, the paging parameter configured by the core network device for the terminal device may not meet an actual requirement of the terminal device. For example, the terminal device does not need to frequently monitor a paging message, but the PTW duration configured by the core network device for the terminal device is long. Consequently, the terminal device needs to monitor the paging message for a plurality of times. This is unfavorable to energy saving of the terminal device.

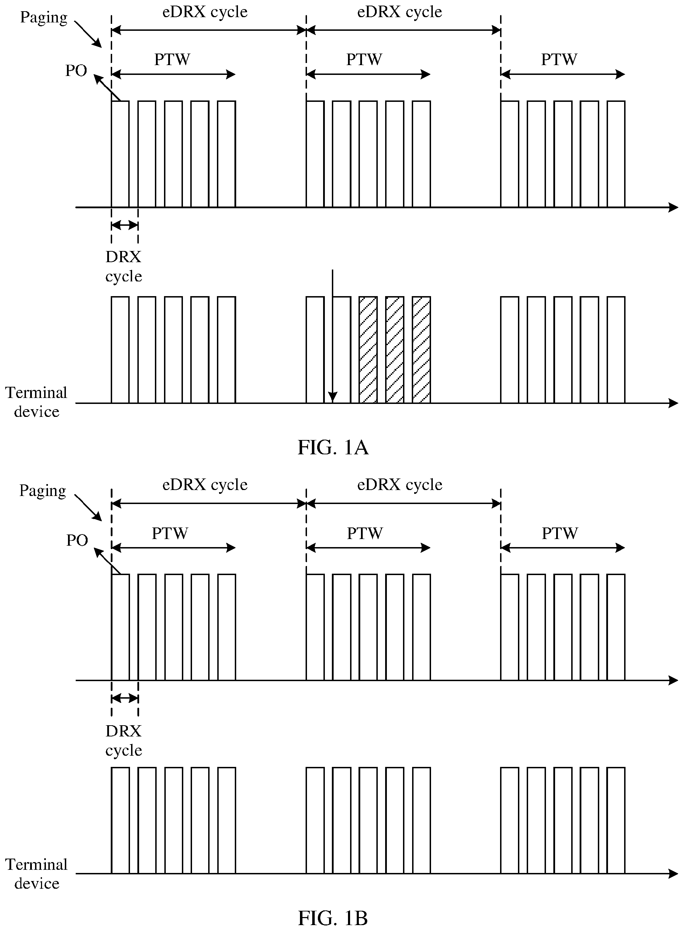

In addition, FIG. 1A shows an example in which a terminal device receives a paging message based on an eDRX cycle. FIG. 1A uses an example in which one PTW includes five POs, and FIG. 1A provides three PTWs. In FIG. 1A, an upper part represents a part corresponding to the base station or the core network device, and a lower part represents a part corresponding to the terminal device. For example, the base station or the core network device sends paging control information in POs in the second PTW, the terminal device fails to detect the paging control information in the first PO in the second PTW, but the terminal device successfully detects the paging control information in the second PO (as shown by an arrow in FIG. 1A), and detects a paging message including an ID of the terminal device. In FIG. 1A, an example in which the terminal device is paged by using the paging control information is used. In this case, the terminal device may not need to perform detection in remaining three POs in the second PTW. In FIG. 1A, slashed boxes corresponding to a UE side indicate three POs on which the terminal device does not need to perform detection. However, if the terminal device is not paged by using the paging control information, that is, if the paging message does not include the ID of the terminal device, the terminal device further needs to continue to perform detection on the remaining POs in the second PTW.

For another example, FIG. 1B shows another example in which a terminal device receives a paging message based on an eDRX cycle. FIG. 1B also uses an example in which one PTW includes five POs, and FIG. 1B provides three PTWs. In FIG. 1B, an upper part represents a part corresponding to the base station or the core network device, and a lower part represents a part corresponding to the terminal device. For example, the base station or the core network does not send any paging control information or paging message in the three PTWs, that is, does not page any terminal device. However, the terminal device still needs to detect paging control information on each PO in the three PTWs. Alternatively, neither paging control information nor a paging message sent by the base station or the core network device in the three PTWs is sent to a terminal device 1. That is, there may be a paging message sent to a terminal device other than the terminal device 1. However, because the terminal device 1 has not detected a paging message including an ID of the terminal device 1, the terminal device 1 still needs to detect paging control information on each PO in the three PTWs.

It can be learned that in one PTW, all terminal devices may not be paged. That is, the base station or the core network does not send a paging message in the PTW. However, all terminal devices still need to monitor all POs in the PTW, to determine whether the terminal devices are paged. However, in this case, it is clear that the terminal device does not receive a paging message. This is unnecessary, and consequently a waste of power of the terminal device is caused. Alternatively, in one PTW, only some terminal devices are paged, but another terminal device that is not paged still needs to monitor all POs in the PTW, to determine whether the terminal device is paged. However, in this case, it is clear that the another terminal device that is not paged does not receive a paging message including an ID of the terminal device. This is unnecessary, and consequently power consumption is increased.

In conclusion, it can be learned that the current paging mechanism is unfavorable to energy saving of the terminal device.

In view of this, the technical solutions in embodiments of this application are provided. In embodiments of this application, a terminal device may send assistance information to a network device, and the network device may determine, based on the assistance information, a paging parameter configured for the terminal device. The assistance information may indicate a state of the terminal device and the like, so that the paging parameter configured by the network device can meet an actual requirement of the terminal device. For example, the network device may configure a paging transmission window with short duration based on assistance information for a terminal device that does not need to frequently monitor a paging message, so that the terminal device monitors a paging message for a small quantity of times. In other words, a quantity of times that the terminal device monitors a paging message in this configuration is less than a quantity of times that the terminal device monitors a paging message in a normal configuration. A quantity of times of monitoring a paging message is reduced, and this helps reduce power consumption of the terminal device and implement energy saving of the terminal device.

The technical solutions provided in embodiments of this application may be applied to a 4th generation mobile communication technology (the 4th generation, 4G) system, for example, an LTE system, may be applied to a 5G system, for example, an NR system, or may be applied to a next-generation mobile communications system or another similar communications system. This is not specifically limited.

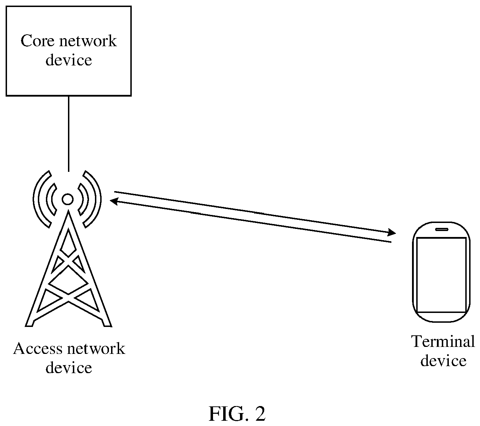

FIG. 2 shows an application scenario according to an embodiment of this application. There is an access network device, a core network device, and a terminal device in FIG. 2. For example, the terminal device is in an RRC idle state or an RRC inactive state. The access network device can page the terminal device, and the core network device can also page the terminal device.

For example, the access network device and the core network device work in an evolved universal mobile telecommunications system terrestrial radio access (evolved UMTS terrestrial radio access, E-UTRA) system, or work in an NR system, or work in a next generation communications system or another communications system.

The core network device in FIG. 2 is, for example, an MME in a 4G system, or an AMF in a 5G system, or a corresponding core network device in a next generation communications system or another communications system.

The access network device in FIG. 2 is, for example, a base station. The access network device corresponds to different devices in different systems. For example, the access network device may correspond to an eNB in the 4G system, and corresponds to an access network device, for example, a gNB, in the 5G system. Certainly, the technical solutions provided in embodiments of this application may also be applied to a future mobile communications system. Therefore, the access network device in FIG. 2 may also correspond to a network device in the future mobile communications system. In FIG. 2, an example in which the access network device is the base station is used. Actually, with reference to the foregoing descriptions, the access network device may alternatively be a device such as an RSU. In addition, FIG. 2 uses an example in which the terminal device is a mobile phone. Actually, based on the foregoing descriptions of the terminal device, the terminal device in embodiments of this application is not limited to the mobile phone.

With reference to the accompanying drawings, the following describes a method provided in embodiments of this application. In embodiments of this application, a paging transmission window is, for example, a PTW, or may have another name, provided that the paging transmission window includes one or more paging occasions used to receive a paging message. The paging transmission window may also be understood as a time window, and the time window may include one or more POs.

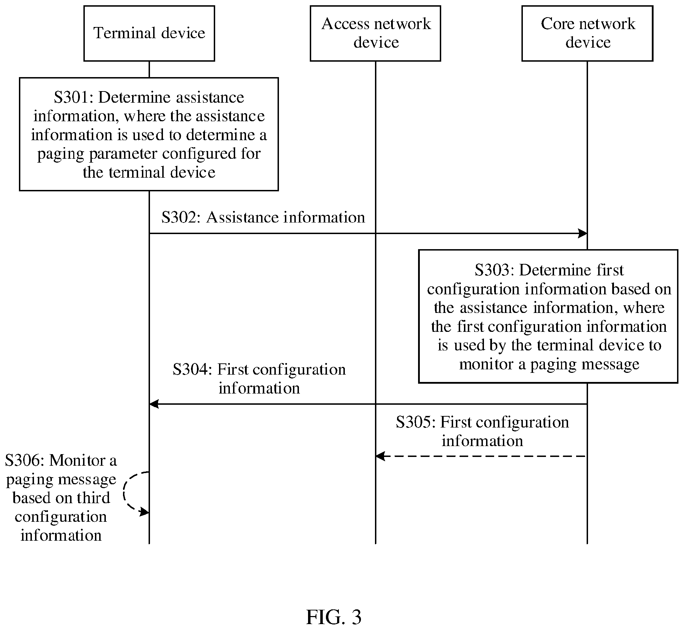

An embodiment of this application provides a first communication method. FIG. 3 is a flowchart of the method. In the following description process, an example in which the method is applied to the network architecture shown in FIG. 2 is used. In this embodiment of this application, for example, a terminal device is in an RRC idle state, and the following paging may be considered as paging initiated by a core network device.

For ease of description, the following uses an example in which the method is performed by a network device and the terminal device. For example, this embodiment of this application is applied to the network architecture shown in FIG. 2. Therefore, the following core network device may be the core network device in the network architecture shown in FIG. 2, the following access network device may be the access network device in the network architecture shown in FIG. 2, and the following terminal device may be the terminal device in the network architecture shown in FIG. 2.

S301: The terminal device determines assistance information, where the assistance information may be used to determine a paging parameter configured for the terminal device.

For example, the assistance information includes one or more of the following: type information of the terminal device, mobility state information of the terminal device, location information of the terminal device, duration that is of a paging transmission window and that is expected by the terminal device, a quantity that is of POs in a paging transmission window and that is expected by the terminal device, or a cycle expected by the terminal device for monitoring a PO in a paging transmission window. For example, the assistance information includes the type information of the terminal device. Alternatively, the assistance information includes the mobility state information of the terminal device. Alternatively, the assistance information includes the location information of the terminal device. Alternatively, the assistance information includes the duration that is of a paging transmission window and that is expected by the terminal device. Alternatively, the assistance information includes the quantity that is of POs in a paging transmission window and that is expected by the terminal device. Alternatively, the assistance information includes the cycle expected by the terminal device for monitoring a PO in a paging transmission window. Alternatively, the assistance information includes the type information of the terminal device and the location information of the terminal device. Alternatively, the assistance information includes the duration that is of a paging transmission window and that is expected by the terminal device and the quantity that is of POs in a paging transmission window and that is expected by the terminal device. Alternatively, the assistance information includes the duration that is of a paging transmission window and that is expected by the terminal device and the cycle expected by the terminal device for monitoring a PO in a paging transmission window. A length of the cycle expected by the terminal device for monitoring a PO in a paging transmission window may be an integer multiple of an interval between two consecutive POs in the paging transmission window.

The type information of the terminal device may indicate a motion state of the terminal device. For example, the type information of the terminal device may indicate that the terminal device is a camera at a fixed location. Whether a location of the terminal device is fixed may be determined based on the type information of the terminal device. If the location of the terminal device is fixed, it may be considered that the terminal device is in a static state. If the location of the terminal device is not fixed, it may be considered that the terminal device is in a moving state, or it may be considered that the terminal device may be in the moving state. If the location of the terminal device is fixed, or if the terminal device is in the static state, a channel condition of the terminal device is stable, and the terminal device may normally receive a paging message without a plurality of times of monitoring. If the location of the terminal device is not fixed, or if the terminal device is in the moving state or may be in the moving state, a channel condition of the terminal device may be unstable, and the terminal device may need to perform monitoring for a plurality of times to normally receive a paging message.

The mobility state information of the terminal device may indicate a mobility state of the terminal device. For example, the mobility state information of the terminal device may indicate that the terminal device is in the static state or the moving state, or may indicate a current speed of the terminal device, or may indicate that the terminal device is currently in a high-speed moving state or a low-speed moving state. A "high speed" and a "low speed" need to be preconfigured. If the terminal device is in the static state, or a speed of the terminal device is low, or the terminal device is in the low-speed moving state, a channel condition of the terminal device is stable, and the terminal device may normally receive a paging message without a plurality of times of monitoring. However, if the terminal device is in the moving state, or a speed of the terminal device is high, or the terminal device is in the high-speed moving state, a channel condition of the terminal device may be unstable, and the terminal device may need to perform monitoring for a plurality of times to normally receive a paging message.

The location information of the terminal device may indicate a location of the terminal device in a cell on which the terminal device currently camps, for example, indicate that the terminal device is located in a central area or an edge area of the cell on which the terminal device currently camps. If the terminal device is located in the central area of the cell on which the terminal device currently camps, a channel condition of the terminal device is stable, and the terminal device may normally receive a paging message without a plurality of times of monitoring. However, if the terminal device is located in the edge area of the cell on which the terminal device currently camps, a channel condition of the terminal device may be unstable, and the terminal device may need to perform monitoring for a plurality of times to normally receive a paging message.

For example, the duration that is of a paging transmission window and that is expected by the terminal device is duration (for example, duration of a paging transmission window) that is of a paging transmission window, that is expected to be configured for the terminal device, and that is determined by the terminal device based on a current status of the terminal device. The duration that is of a paging transmission window and that is expected by the terminal device may be less than a length of a PTW in a current normal configuration, or equal to a length of a PTW in the current normal configuration, or may be greater than a length of a PTW in the current normal configuration. The normal configuration described in this embodiment of this application is a paging configuration of the terminal device in the conventional technology, that is, a paging parameter configured by the network for the terminal device without referring to the assistance information in the conventional technology.

For example, the quantity that is of POs in a paging transmission window and that is expected by the terminal device is a quantity that is of POs that need to be monitored in the paging transmission window, that is expected to be configured for the terminal device, and that is determined by the terminal device based on a current status of the terminal device. A quantity that is of POs in a paging transmission window and that is expected by the terminal device may be less than a quantity of POs in a PTW in the current normal configuration, or equal to a quantity of POs in a PTW in the current normal configuration, or may be greater than a quantity of POs included in a PTW in the current normal configuration.

For example, the cycle expected by the terminal device for monitoring a PO in a paging transmission window is a cycle that is for monitoring a PO in the paging transmission window, that is expected to be configured for the terminal device, and that is determined by the terminal device based on a current status of the terminal device. The cycle expected by the terminal device for monitoring a PO in a paging transmission window may be less than a cycle in which the terminal device monitors a PO in a PTW in the current normal configuration, or may be equal to a cycle in which the terminal device monitors a PO in a PTW in the current normal configuration, or may be greater than a cycle in which the terminal device monitors a PO in a PTW in the current normal configuration. For example, in the current normal configuration, a cycle in which the terminal device monitors a PO in a PTW is one DRX cycle (as described above, compared with DRX, eDRX has a longer cycle, that is, a length of the eDRX cycle is greater than a length of a DRX cycle. For example, it is understood that a length of one eDRX cycle is equal to lengths of a plurality of DRX cycles, and in a PTW included in an eDRX cycle, an interval between two consecutive POs is one DRX cycle). A cycle expected by the terminal device for monitoring a PO in a paging transmission window is, for example, two DRX cycles, one DRX cycle, or 0.5 DRX cycle.

In other words, the assistance information may include state information of the terminal device. For example, all the type information of the terminal device, the mobility state information of the terminal device, or the location information of the terminal device may be considered as the state information of the terminal device. Alternatively, the assistance information may include configuration information expected by the terminal device. For example, all the duration that is of a paging transmission window and that is expected by the terminal device, the quantity that is of POs in a paging transmission window and that is expected by the terminal device, or a cycle expected by the terminal device for monitoring a PO in a paging transmission window may be considered as the configuration information expected by the terminal device.

The assistance information may be used to determine the paging parameter configured for the terminal device. For example, the assistance information may be used to determine a paging transmission window configured for the terminal device.

S302: The terminal device sends the assistance information to the core network device, and the core network device receives the assistance information from the terminal device.

For example, the terminal device may include the assistance information in a non-access stratum (non-access stratum, NAS) message and send the NAS message to the core network device. For example, the NAS message is a registration request (registration request) message, or may be another NAS message, for example, may be a NAS message after registration is completed.

S303: The core network device determines first configuration information based on the assistance information, where the first configuration information is used by the terminal device to monitor a paging message, and the first configuration information may be understood as a paging parameter configured by the core network device for the terminal device, or understood as a paging configuration. Alternatively, the first configuration information in this embodiment of this application may be referred to as second configuration information.

After obtaining the assistance information, the core network device may determine the first configuration information based on the assistance information. If a quantity of times that the terminal device monitors a paging message in the first configuration information is less than a quantity of times that the terminal device monitors a paging message in a normal configuration, the first configuration information may also be referred to as a first relaxation configuration. In other words, power required by the terminal device to monitor a paging message based on the first configuration information is less than power required by the terminal device to monitor a paging message based on the normal configuration. In this case, compared with a mechanism in which the terminal device normally monitors a paging message, monitoring the paging message by the terminal device based on the first configuration information is a "relaxation" for the terminal device, and therefore it is referred to as a "relaxation configuration". Alternatively, if the quantity of times that the terminal device monitors a paging message in the first configuration information is greater than the quantity of times that the terminal device monitors a paging message in the normal configuration, the first configuration information may also be referred to as a first tightening configuration. In other words, the power required by the terminal device to monitor a paging message based on the first configuration information is greater than the power required by the terminal device to monitor a paging message based on the normal configuration. In this case, compared with a mechanism in which the terminal device normally monitors a paging message, monitoring the paging message by the terminal device based on the first configuration information is "tightening" for the terminal device, and therefore it is referred to as a "tightening configuration". The quantity of times that the terminal device monitors a paging message in the first configuration information is a quantity of times that the terminal device monitors a paging message in one paging transmission window in the first configuration information. The quantity of times that the terminal device monitors a paging message in the normal configuration is a quantity of times that the terminal device monitors a paging message in one paging transmission window in the normal configuration.

The first configuration information determined by the core network device includes, for example, one or more of first duration, a first quantity, first sequence number information, or a first cycle. For example, the first configuration information includes the first duration; or the first configuration information includes the first quantity; or the first configuration information includes the first sequence number information; or the first configuration information includes the first cycle; or the first configuration information includes the first duration and the first quantity; or the first configuration information includes the first duration and the first cycle; or the first configuration information includes the first quantity and the first cycle; or the first configuration information includes the first duration, the first quantity, and the first cycle. The first duration is duration of a paging transmission window, the first quantity is a quantity of POs that need to be monitored by the terminal device in a paging transmission window, the first sequence number information is a sequence number (or referred to as an index, a number, or the like) of a PO that needs to be monitored by the terminal device in a paging transmission window, and the first cycle is a cycle in which the terminal device monitors a PO in a paging transmission window. Duration of the first cycle may be an integer multiple of an interval between two consecutive POs in the paging transmission window. Certainly, the first configuration information determined by the core network device may further include other information. This is not specifically limited.

If the first configuration information includes the first duration, and the normal configuration includes fourth duration, the first duration may be less than, equal to, or greater than the fourth duration. The fourth duration is duration of a paging transmission window. If the first configuration information includes the first quantity, and the normal configuration includes a fourth quantity, the first quantity may be less than, equal to, or greater than the fourth quantity. The fourth quantity is a quantity of POs that need to be monitored by the terminal device in a paging transmission window. If the first configuration information includes the first cycle, and the normal configuration includes a fourth cycle, duration of the first cycle may be less than, equal to, or greater than duration of the fourth cycle. The fourth cycle is a cycle in which the terminal device monitors a PO in a paging transmission window. If the first configuration information includes the first sequence number information, and the normal configuration includes fourth sequence number information, sequence numbers indicated by the first sequence number information may be the same as sequence numbers indicated by the fourth sequence number information, or the sequence numbers indicated by the first sequence number information are more than the sequence numbers indicated by the fourth sequence number information, or the sequence numbers indicated by the first sequence number information are fewer than the sequence numbers indicated by the fourth sequence number information. The fourth sequence number information is a sequence number (or referred to as an index, a number, or the like) of a PO that needs to be monitored by the terminal device in a paging transmission window.

If the assistance information includes the state information of the terminal device, the core network device needs to determine the first configuration information for the terminal device based on the state information of the terminal device. For example, if the assistance information includes one or more of the type information of the terminal device, the mobility state information of the terminal device, or the location information of the terminal device, the core network device may determine the first configuration information based on the assistance information. For example, the assistance information includes the type information of the terminal device, and the core network device may determine, based on the type information of the terminal device, whether the location of the terminal device is fixed. If the location of the terminal device is fixed, or if the terminal device is in the static state, the terminal device may not need to monitor a paging message for a plurality of times. However, if the location of the terminal device is not fixed, or if the terminal device is in the moving state or may be in the moving state, the terminal device may need to monitor a paging message for a large quantity of times (for example, the terminal device needs to normally monitor a paging message or monitor a paging message more frequently).

For another example, the assistance information includes the mobility state information of the terminal device, and the core network device may determine the mobility state of the terminal device based on the mobility state information of the terminal device. If the terminal device is in the static state, or the speed of the terminal device is low, or the terminal device is in the low-speed moving state, the terminal device may not need to monitor a paging message for a plurality of times. However, if the terminal device is in the moving state, or the speed of the terminal device is high, or the terminal device is in the high-speed moving state, the terminal device may need to monitor a paging message for a large quantity of times (for example, the terminal device needs to normally monitor a paging message or monitor a paging message more frequently).

For another example, the assistance information includes the location information of the terminal device, and the core network device may determine, based on the location information of the terminal device, the location of the terminal device in the cell on which the terminal device currently camps. If the terminal device is located in the central area of the cell on which the terminal device currently camps, the terminal device may not need to monitor a paging message for a plurality of times. However, if the terminal device is located in the edge area of the cell on which the terminal device currently camps, the terminal device may need to monitor a paging message for a large quantity of times (for example, the terminal device needs to normally monitor a paging message, or monitor a paging message more frequently).

If the core network device determines that the terminal device does not need to monitor a paging message for a plurality of times, or in other words, determines that the terminal device does not need to frequently monitor a paging message, if the first configuration information determined by the core network device includes the first duration, the first duration is, for example, less than duration of a PTW in the current normal configuration. Alternatively, if the first configuration information determined by the core network device includes the first quantity, the first quantity may be less than a quantity of POs included in a PTW in the current normal configuration. Alternatively, if the first configuration information determined by the core network device includes the first sequence number information, the sequence numbers indicated by the first sequence number information include, for example, sequence numbers of some POs monitored in a PTW in the current normal configuration. Alternatively, if the first configuration information determined by the core network device includes the first cycle, the duration of the first cycle is, for example, less than duration of a cycle of monitoring a PO in a PTW in the current normal configuration. For example, the sequence numbers indicated by the first sequence number information may include sequence numbers of the first half of POs in a PTW, but do not include sequence numbers of the second half of POs in the PTW; or include sequence numbers of the first and last POs in the PTW, but do not include sequence numbers of other POs in the PTW. It should be emphasized that the PO sequence numbers included herein are indicated by a network to UE, but specific PO sequence numbers indicated to the UE are not limited. For example, if the current normal configuration is used, a cycle in which the terminal device monitors a PO in a PTW is one DRX cycle (which may be understood as that a length of one eDRX cycle is equal to a length of a plurality of DRX cycles, and an interval between two consecutive POs in a PTW included in an eDRX cycle is one DRX cycle), and the first cycle is, for example, two DRX cycles or three DRX cycles.

If the core network device determines that the terminal device needs to monitor a paging message for a large quantity of times (for example, the terminal device needs to normally monitor a paging message or monitor a paging message more frequently), if the first configuration information determined by the core network device includes the first duration, the first duration is, for example, equal to duration of a PTW in the current normal configuration, or the first duration may be greater than duration of a PTW in the current normal configuration. Alternatively, if the first configuration information determined by the core network device includes the first quantity, the first quantity is, for example, equal to a quantity of POs included in a PTW in the current normal configuration, or the first quantity may be greater than a quantity of POs included in a PTW in the current normal configuration. Alternatively, if the first configuration information determined by the core network device includes the first cycle, the duration of the first cycle is, for example, equal to a length of a cycle of monitoring a PO in a PTW in the current normal configuration, or the duration of the first cycle may be greater than a length of a period of monitoring a PO in a PTW in the current normal configuration. Alternatively, if the first configuration information determined by the core network device includes the first sequence number information, the sequence numbers indicated by the first sequence number information include, for example, sequence numbers of all POs monitored in a PTW in the current normal configuration, or the duration of the first cycle may include sequence numbers of all POs monitored in a PTW in the current normal configuration, and include sequence numbers of more POs. For example, if the current normal configuration is used, a cycle in which the terminal device monitors a PO in one PTW is one DRX cycle, and the first cycle is, for example, 0.5 DRX cycles.

If the assistance information includes the configuration information expected by the terminal device, the core network device may determine the first configuration information for the terminal device based on the configuration information expected by the terminal device. For example, if the assistance information includes one or more of the duration that is of a paging transmission window and that is expected by the terminal device, the quantity that is of POs in a paging transmission window and that is expected by the terminal device, the cycle expected by the terminal device for monitoring a PO in a paging transmission window, or the like, the core network device may determine the first configuration information based on the assistance information. For example, the core network device may determine the configuration information expected by the terminal device as the first configuration information, or the core network may finally determine the first configuration information with reference to another factor, for example, with reference to a factor such as capability information of the terminal device. The first configuration information determined in this case may be the same as or different from the configuration information expected by the terminal device.

For example, the assistance information includes the duration that is of a paging transmission window and that is expected by the terminal device, and the core network device may determine the first configuration information based on the duration that is of a paging transmission window and that is expected by the terminal device. For example, if the core network device determines, as the first configuration information, the duration that is of the paging transmission window and that is expected by the terminal device, the first configuration information includes the first duration, and the first duration is equal to the duration that is of a paging transmission window and that is expected by the terminal device. Alternatively, the core network device may further determine the first configuration information with reference to another factor. For example, the first configuration information determined by the core network device includes the first duration, and the first duration is equal to the duration that is of a paging transmission window and that is expected by the terminal device, or the first duration may be greater than or less than the duration that is of a paging transmission window and that is expected by the terminal device. For another example, in addition to the first duration, the first configuration information determined by the core network device may further include other information, for example, include the first quantity or the first cycle. This is not specifically limited.

For another example, the assistance information includes the quantity that is of POs in a paging transmission window and that is expected by the terminal device, and the core network device may determine the first configuration information based on the quantity that is of POs in a paging transmission window and that is expected by the terminal device. For example, if the core network device determines, as the first configuration information, the quantity that is of POs in a paging transmission window and that is expected by the terminal device, the first configuration information includes the first quantity, and the first quantity is equal to the quantity that is of POs in the paging transmission window and that is expected by the terminal device. Alternatively, the core network device may further determine the first configuration information with reference to another factor. For example, the first configuration information determined by the core network device includes the first quantity, and the first quantity is equal to the quantity that is of POs in the paging transmission window and that is expected by the terminal device, or the first duration may be greater than or less than the quantity that is of POs in the paging transmission window and that is expected by the terminal device. For another example, in addition to the first quantity, the first configuration information determined by the core network device may further include other information, for example, include the first duration or the first cycle. This is not specifically limited.

For another example, the assistance information includes the cycle expected by the terminal device for monitoring a PO in a paging transmission window, and the core network device may determine the first configuration information based on the cycle expected by the terminal device for monitoring a PO in a paging transmission window. For example, if the core network device determines, as the first configuration information, the cycle expected by the terminal device for monitoring a PO in a paging transmission window, the first configuration information includes the first cycle, and the duration of the first cycle is equal to the duration of the cycle expected by the terminal device for monitoring a PO in a paging transmission window. Alternatively, the core network device may further determine the first configuration information with reference to another factor. For example, the first configuration information determined by the core network device includes the first cycle, and the duration of the first cycle is equal to the duration of the cycle expected by the terminal device for monitoring a PO in a paging transmission window, or the duration of the first cycle may be greater than or less than the duration of the cycle expected by the terminal device for monitoring a PO in a paging transmission window. For another example, in addition to the first cycle, the first configuration information determined by the core network device may further include other information, for example, include the first duration or the first quantity. This is not specifically limited.

If content included in the assistance information is different, the first configuration information determined by the core network device may be different. That content included in the assistance information is different may mean that types of parameters included in the assistance information are different. For example, if one piece of assistance information includes the type information of the terminal device, and another piece of assistance information includes the location information of the terminal device, it is considered that the two pieces of assistance information include different content. For another example, if one piece of assistance information includes the duration that is of a paging transmission window and that is expected by the terminal device, and another piece of assistance information includes the duration that is of a paging transmission window and that is expected by the terminal device and the quantity that is of paging occasions in a paging transmission window and that is expected by the terminal device, it is considered that the two pieces of assistance information include different content.

Alternatively, that content included in the assistance information is different may mean that values of a same parameter included in the assistance information are different. For example, if one piece of assistance information includes type information of the terminal device, and another piece of assistance information also includes type information of the terminal device, but the two pieces of type information include different content, it is considered that the two pieces of assistance information include different content. For another example, if one piece of assistance information includes duration that is of a paging transmission window and that is expected by the terminal device, and another piece of assistance information also includes duration that is of a paging transmission window and that is expected by the terminal device, but the two lengths are different, it is considered that the two pieces of assistance information include different content.

That the first configuration information determined by the core network device is different may mean that parameters included in the first configuration information are different. For example, one type of first configuration information includes the first duration, and another type of first configuration information includes the first quantity. For another example, one type of first configuration information includes the first duration and a first quantity, and another type of first configuration information includes the first duration and the first cycle. Alternatively, that the first configuration information determined by the core network device is different may mean that values of a same parameter included in the first configuration information are different. For example, one type of first configuration information includes first duration, and another type of first configuration information also includes first duration, but two values of the first duration are different. For another example, one type of first configuration information includes a first cycle, and another type of first configuration information also includes a first cycle, but duration of the two first cycles is different.

For example, assistance information 1 reported by a terminal device includes type information of the terminal device and duration that is of a paging transmission window and that is expected by the terminal device. The type information of the terminal device indicates that the terminal device is an electricity meter at a fixed location, and the duration that is of a paging transmission window and that is expected by the terminal device is, for example, 3 seconds. Assistance information 2 reported by another terminal device also includes type information of the terminal device and duration that is of a paging transmission window and that is expected by the terminal device. The type information of the terminal device indicates that the terminal device is a camera at a fixed location, and the duration that is of a paging transmission window and that is expected by the terminal device is, for example, 2 seconds. The core network device determines first configuration information 1 based on the assistance information 1, and determines first configuration information 2 based on the assistance information 2. The first configuration information 1 and the first configuration information 2 may be the same. For example, the first configuration information 1 includes first duration 1, the first configuration information 2 includes first duration 2, and both the first duration 1 and the first duration 2 are equal to 3 seconds. Alternatively, the first configuration information 1 and the first configuration information 2 may be different. For example, the first configuration information 1 includes first duration 1, the first configuration information 2 includes first duration 2, the first duration 1 is 3 seconds, and the first duration 2 is 2 seconds.

S304: The core network device sends a first message, and the terminal device receives the first message from the core network device. The first message may indicate the first configuration information.

After determining the first configuration information, the core network device may send the first configuration information to the terminal device. For example, the core network device may send the first configuration information to the terminal device by using a NAS message.

S305: The core network device sends a second message, and the access network device receives the second message from the core network device. The second message may indicate the first configuration information.

After determining the first configuration information, the core network device may also send the first configuration information to the access network device. S305 is an optional step, is not necessarily performed, and therefore is represented by a dashed line in FIG. 3.

If S305 is performed, S304 may be performed before S305, or S304 may be performed after S305, or S304 and S305 may be simultaneously performed.

S306: The terminal device monitors a paging message based on third configuration information.

S306 is an optional step, is not necessarily performed, and therefore is represented by a dashed line in FIG. 3.

The third configuration information is determined based on configuration information received by the terminal device. In this embodiment of this application, the terminal device receives only the first configuration information. Therefore, the third configuration information may be determined based on the first configuration information. For example, the third configuration information is the same as the first configuration information, or the third configuration information is the first configuration information.

For example, if the third configuration information is the same as the first configuration information, and the first configuration information includes the first duration, the terminal device may monitor a paging message based on a paging transmission window of the first duration. For another example, if the first configuration information includes the first quantity, the terminal device needs to monitor only the first quantity of POs in a paging transmission window. POs to be monitored by the terminal device may be determined by the terminal device, indicated by the network device, specified in a protocol, or the like. For still another example, if the first configuration information includes the first sequence number information, the terminal device needs to monitor, in a paging transmission window, only a PO indicated by the first sequence number information. For yet another example, if the first configuration information includes the first cycle, the terminal device may monitor a PO in a paging transmission window based on the first cycle.

In this embodiment of this application, both the core network device that sends a paging message and the terminal device that monitors a paging message can determine the third configuration information, so that the core network device can send a paging message based on the third configuration information, and the terminal device can monitor a paging message based on the third configuration information. In this way, the core network device does not need to send a redundant paging message, to reduce signaling overheads, and the terminal device does not need to monitor a paging message on more POs, to reduce power consumption of the terminal device.

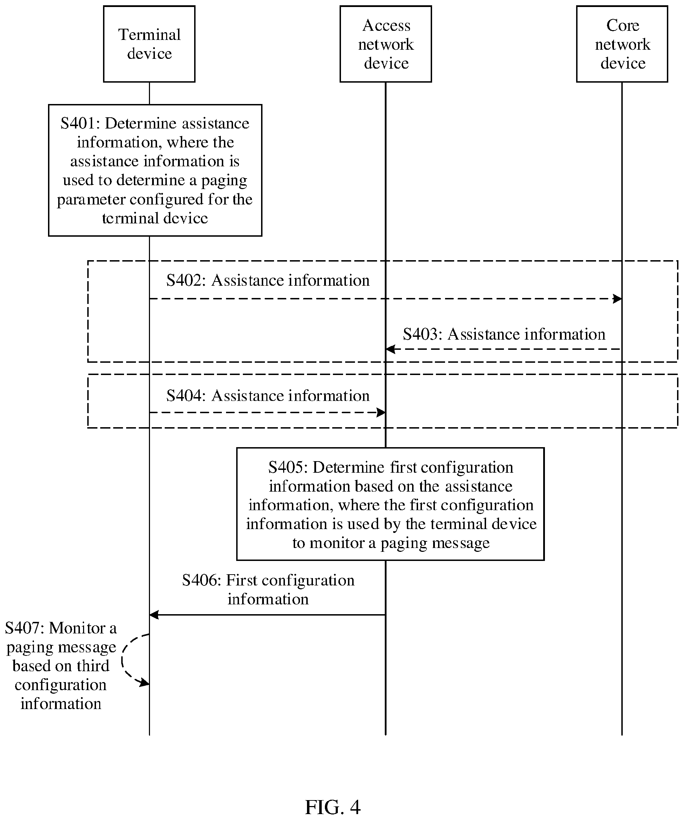

To resolve a same technical problem, an embodiment of this application provides a second communication method. FIG. 4 is a flowchart of the method. In the following description process, an example in which the method is applied to the network architecture shown in FIG. 2 is used. In this embodiment of this application, for example, a terminal device is in an RRC inactive state, and the following paging may be considered as paging initiated by an access network device.

For ease of description, the following uses an example in which the method is performed by a network device and the terminal device. For example, this embodiment of this application is applied to the network architecture shown in FIG. 2. Therefore, the following access network device may be the access network device in the network architecture shown in FIG. 2, the following core network device may be the core network device in the network architecture shown in FIG. 2, and the following terminal device may be the terminal device in the network architecture shown in FIG. 2.

S401: The terminal device determines assistance information, where the assistance information may be used to determine a paging parameter configured for the terminal device.

For more content of S401, refer to the description of S301 in the embodiment shown in FIG. 3.

S402: The terminal device sends the assistance information to the core network device, and the core network device receives the assistance information from the terminal device.

For example, the terminal device may include the assistance information in a NAS message and send the NAS message to the core network device. For example, the NAS message is a registration request message, or may be another NAS message, for example, may be a NAS message after registration is completed.

S403: The core network device sends the assistance information to the access network device, and the access network device receives the assistance information from the core network device.

The terminal device in the inactive state needs to be paged, and the access network device may initiate paging. Therefore, in this embodiment of this application, the access network device may determine a corresponding paging configuration for the terminal device. The assistance information may be used by the access network device to determine the paging configuration. Therefore, the core network device may send the assistance information to the access network device.

S404: The terminal device sends the assistance information to the access network device, and the access network device receives the assistance information from the terminal device.

S402 and S403 and S404 are parallel steps, and only one of them needs to be performed. That is, S402 and S403 are performed, or S404 is performed. It is not necessary to perform both. Therefore, S402 to S404 are all considered as optional steps, and therefore are represented by dashed lines in FIG. 4.

In other words, the terminal device may send the assistance information to the core network device, and the core network device forwards the assistance information to the access network device. Alternatively, the terminal device may directly send the assistance information to the access network device without forwarding by the core network device. This helps reduce signaling overheads.

For example, the terminal device may send the assistance information to the access network device in a random access procedure, for example, send the assistance information to the access network device by using a message 3 (Msg3) of a 4-step random access channel (4-step random access channel, 4-step RACH), or send the assistance information to the access network device by using a message B (MsgB) of a 2-step RACH (2-step RACH). Alternatively, the terminal device may send the assistance information to the access network device after random access succeeds. For example, the terminal device may send the assistance information to the access network device by using an RRC message (for example, a terminal device assistance information message (UE Assistance Information message)).

S405: The access network device determines first configuration information based on the assistance information, where the first configuration information is used by the terminal device to monitor a paging message. Alternatively, the first configuration information in this embodiment of this application may be referred to as second configuration information.

For a manner of determining the first configuration information by the access network device, refer to the description of determining the first configuration information by the core network device in the embodiment shown in FIG. 3. A determining process is similar. For more content of S405, refer to the description of S303 in the embodiment shown in FIG. 3.

S406: The access network device sends a first message, and the terminal device receives the first message from the access network device. The first message may indicate the first configuration information.

After determining the first configuration information, the access network device may send the first configuration information to the terminal device. For example, the access network device may send the first configuration information to the terminal device by using an RRC message. For example, the RRC message is an RRC release message used to release the terminal device to an RRC inactive state, or may be another RRC message.

S407: The terminal device monitors a paging message based on third configuration information.

S407 is an optional step, is not necessarily performed, and therefore is represented by a dashed line in FIG. 4.

The third configuration information is determined based on configuration information received by the terminal device. In this embodiment of this application, the terminal device receives only the first configuration information. Therefore, the third configuration information may be determined based on the first configuration information. For example, the third configuration information is the same as the first configuration information, or the third configuration information is the first configuration information.

For example, if the third configuration information is the same as the first configuration information, and the first configuration information includes first duration, the terminal device may monitor a paging message based on a paging transmission window of the first duration. For another example, if the first configuration information includes a first quantity, the terminal device needs to monitor only the first quantity of POs in a paging transmission window. POs to be monitored by the terminal device may be determined by the terminal device, indicated by the network device, specified in a protocol, or the like. For still another example, if the first configuration information includes first sequence number information, the terminal device needs to monitor, in a paging transmission window, only a PO indicated by the first sequence number information. For yet another example, if the first configuration information includes a first cycle, the terminal device may monitor a PO in a paging transmission window based on the first cycle.

In this embodiment of this application, both the access network device that sends a paging message and the terminal device that monitors a paging message can determine the third configuration information, so that the access network device can send a paging message based on the third configuration information, and the terminal device can monitor a paging message based on the third configuration information. In this way, the access network device does not need to send a redundant paging message, to reduce signaling overheads, and the terminal device does not need to monitor a paging message on more POs, to reduce power consumption of the terminal device.

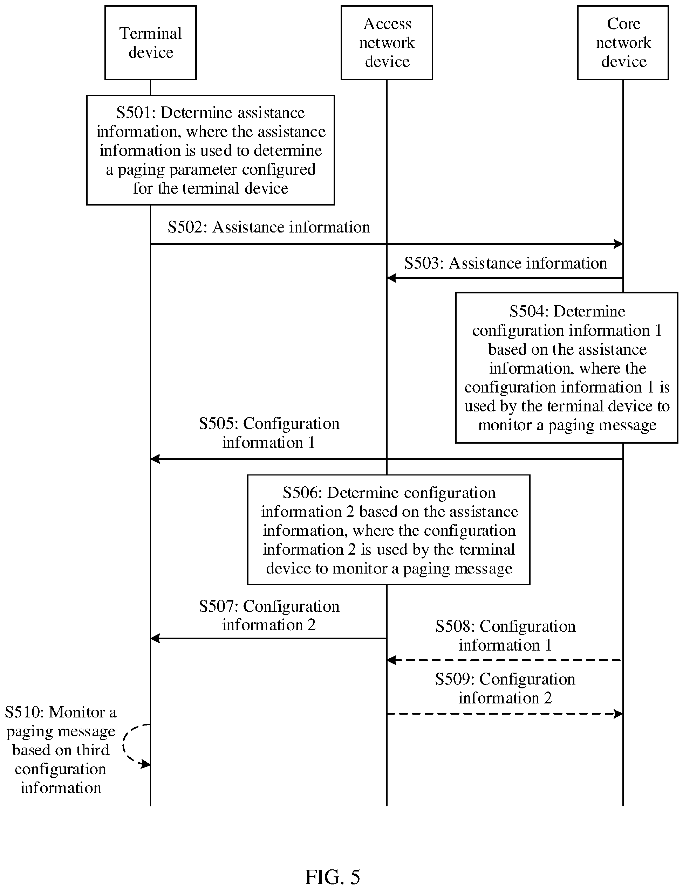

To resolve a same technical problem, an embodiment of this application provides a third communication method. FIG. 5 is a flowchart of the method. In the following description process, an example in which the method is applied to the network architecture shown in FIG. 2 is used. In this embodiment of this application, for example, a terminal device is in an RRC inactive state or an RRC idle state, and the following paging may be considered as paging initiated by a core network device or paging initiated by an access network device.

For ease of description, the following uses an example in which the method is performed by a network device and the terminal device. For example, this embodiment of this application is applied to the network architecture shown in FIG. 2. Therefore, the following access network device may be the access network device in the network architecture shown in FIG. 2, the following core network device may be the core network device in the network architecture shown in FIG. 2, and the following terminal device may be the terminal device in the network architecture shown in FIG. 2.

S501: The terminal device determines assistance information, where the assistance information may be used to determine a paging parameter configured for the terminal device.

For more content of S501, refer to the description of S301 in the embodiment shown in FIG. 3.

S502: The terminal device sends the assistance information to the core network device, and the core network device receives the assistance information from the terminal device.

For example, the terminal device may include the assistance information in a NAS message and send the NAS message to the core network device. For example, the NAS message is a registration request message, or may be another NAS message, for example, may be a NAS message after registration is completed.

S503: The core network device sends the assistance information to the access network device, and the access network device receives the assistance information from the core network device.

S504: The core network device determines configuration information based on the assistance information, where the configuration information is used by the terminal device to monitor a paging message. For example, the configuration information is referred to as first configuration information, or referred to as second configuration information.

For more content of S504, refer to the description of S303 in the embodiment shown in FIG. 3.

S505: The core network device sends the configuration information, and the terminal device receives the configuration information from the core network device.

After determining the configuration information, the core network device may send the configuration information to the terminal device. For example, the core network device may send the configuration information to the terminal device by using a NAS message.

S506: The access network device determines configuration information based on the assistance information, where the configuration information is used by the terminal device to monitor a paging message.

If the configuration information determined by the core network device in S504 is referred to as first configuration information, the configuration information determined by the access network device in S506 may be referred to as second configuration information. Alternatively, if the configuration information determined by the core network device in S504 is referred to as second configuration information, the configuration information determined by the access network device in S506 may be referred to as first configuration information. In the following, the configuration information determined by the core network device in S504 is referred to as configuration information 1, and the configuration information determined by the access network device in S506 is referred to as configuration information 2. That is, the configuration information 1 is the first configuration information, and the configuration information 2 is the second configuration information; or the configuration information 1 is the second configuration information, and the configuration information 2 is the first configuration information.

For more content of S506, refer to the description of S405 in the embodiment shown in FIG. 4.

S507: The access network device sends the configuration information 2, and the terminal device receives the configuration information 2 from the access network device.

For more content of S507, refer to the description of S406 in the embodiment shown in FIG. 4.

S508: The core network device sends the configuration information 1 to the access network device, and the access network device receives the configuration information 1 from the core network device.

If the terminal device is in the RRC idle state, S508 may not be performed.

S509: The access network device sends the configuration information 2 to the core network device, and the core network device receives the configuration information 2 from the access network device.

Both S508 and S509 are optional steps, and therefore are represented by dashed lines in FIG. 5.

S510: The terminal device monitors a paging message based on third configuration information.

S510 is also an optional step, and therefore is represented by a dashed line in FIG. 5.

The third configuration information is determined based on configuration information received by the terminal device. In this embodiment of this application, the terminal device receives the first configuration information and the second configuration information. Therefore, the third configuration information may be determined based on the first configuration information and the second configuration information. For example, the third configuration information is the same as the first configuration information; or the third configuration information is the same as the second configuration information; or the third configuration information is different from both the first configuration information and the second configuration information, but the third configuration information is related to the first configuration information and the second configuration information.

For example, the first configuration information includes one or more of first duration, a first quantity, first sequence number information, or a first cycle. For explanations of the three parameters, refer to the embodiment shown in FIG. 3. The second configuration information includes one or more of second duration, a second quantity, second sequence number information, or a second cycle. For explanation of the second duration, refer to the explanation of the first duration in the embodiment shown in FIG. 3. For explanation of the second quantity, refer to the explanation of the first quantity in the embodiment shown in FIG. 3. For explanation of the second sequence number information, refer to the explanation of the first sequence number information in the embodiment shown in FIG. 3. For explanation of the second cycle, refer to the explanation of the first cycle in the embodiment shown in FIG. 3. If the first configuration information includes the first duration, and the second configuration information includes the second duration, the first duration may be equal to the second duration, or the first duration may be unequal to the second duration. If the first configuration information includes the first quantity, and the second configuration information includes the second quantity, the first quantity may be equal to the second quantity, or the first quantity may be unequal to the second quantity. If the first configuration information includes the first sequence number information, and the second configuration information includes the second sequence number information, a sequence number indicated by the first sequence number information may be the same as or different from a sequence number indicated by the second sequence number information. If the first configuration information includes the first cycle, and the second configuration information includes the second cycle, duration of the first cycle may be equal to duration of the second cycle, or duration of the first cycle may not be unequal to duration of the second cycle.

The third configuration information may include one or more of third duration, a third quantity, third sequence number information, or a third cycle. The third duration is duration of a paging transmission window, the third quantity is a quantity of POs that need to be monitored in a paging transmission window, the third sequence number information is a sequence number (or referred to as an index, code, or the like) of a PO that needs to be monitored in a paging transmission window, and the third cycle is a cycle of monitoring a PO in a paging transmission window. Duration of the third cycle may be an integer multiple of an interval between two consecutive POs in the paging transmission window. If the third configuration information includes the third duration, the first configuration information includes the first duration, and the second configuration information includes the second duration, the third duration is, for example, a smaller value or a larger value in the first duration and the second duration, or the third duration is, for example, an arithmetic mean or a weighted mean of the first duration and the second duration. If the third configuration information includes the third quantity, the first configuration information includes the first quantity, and the second configuration information includes the second quantity, the third quantity is, for example, a smaller value or a larger value in the first quantity and the second quantity, or the third quantity is, for example, an arithmetic mean or a weighted mean of the first quantity and the second quantity. If the third configuration information includes the third sequence number information, the first configuration information includes the first sequence number information, and the second configuration information includes the second sequence number information, the third sequence number information is, for example, a smaller value or a larger value in the first sequence number information and the second sequence number information (for example, if the first sequence number information indicates five sequence numbers, and the second sequence number information indicates four sequence numbers, the third sequence number information may indicate four sequence numbers, that is the third sequence number information is the same as the second sequence number information; or the third sequence number information may indicate five sequence numbers, that is, the third sequence number information is the same as the first sequence number information). If the third configuration information includes the third cycle, the first configuration information includes the first cycle, and the second configuration information includes the second cycle, the duration of the third cycle is, for example, a smaller value or a larger value in the duration of the first cycle and the duration of the second cycle, or the duration of the third cycle is, for example, an arithmetic mean or a weighted mean of the duration of the first cycle and the duration of the second cycle.

If the determined third configuration information is a larger value in the first configuration information and the third configuration information (for example, the third duration is a larger value in the first duration and the second duration), a success rate of monitoring a paging message by the terminal device can be maximized, and a probability of missed detection by the terminal device can be reduced. Alternatively, if the determined third configuration information is a smaller value in the first configuration information and the third configuration information (for example, the third duration is a smaller value in the first duration and the second duration), power consumption of the terminal device can be reduced.

In addition, if the core network device also obtains the first configuration information and the second configuration information, the core network device may also determine the third configuration information based on the first configuration information and the second configuration information. The core network device and the terminal device determine the third configuration information in a same manner, for example, both select a larger value in the first configuration information and the second configuration information as the third configuration information. In this way, the third configuration information determined by the access network device and the terminal device is the same, to ensure behavior consistency between the core network device and the terminal device. For example, the manner is set by the core network device and notified to the terminal device, or is specified in a protocol. If the access network device also obtains the first configuration information and the second configuration information, the access network device may also determine the third configuration information based on the first configuration information and the second configuration information. The access network device and the terminal device determine the third configuration information in a same manner. In this way, the third configuration information determined by the access network device and the terminal device is the same.

For example, if the third configuration information is the same as the first configuration information, and the first configuration information includes the first duration, the terminal device may monitor a paging message based on a paging transmission window of the first duration. For another example, if the first configuration information includes the first quantity, the terminal device needs to monitor only the first quantity of POs in a paging transmission window. POs to be monitored by the terminal device may be determined by the terminal device, indicated by the network device, specified in a protocol, or the like. For still another example, if the first configuration information includes the first sequence number information, the terminal device needs to monitor, in a paging transmission window, only a PO indicated by the first sequence number information. For yet another example, if the first configuration information includes a first cycle, the terminal device may monitor a PO in a paging transmission window based on the first cycle.

In this embodiment of this application, both the network device (for example, the core network device or the access network device) that sends a paging message and the terminal device that monitors a paging message can determine the third configuration information, so that the network device can send a paging message based on the third configuration information, and the terminal device can monitor a paging message based on the third configuration information. In this way, the network device does not need to send a redundant paging message, to reduce signaling overheads, and the terminal device does not need to monitor a paging message on more POs, to reduce power consumption of the terminal device. In addition, the terminal device may determine the final configuration information based on a plurality of types of configuration information (for example, the first configuration information and the second configuration information), so that the determined configuration information can be more accurate and better meet requirements of a plurality of network elements.

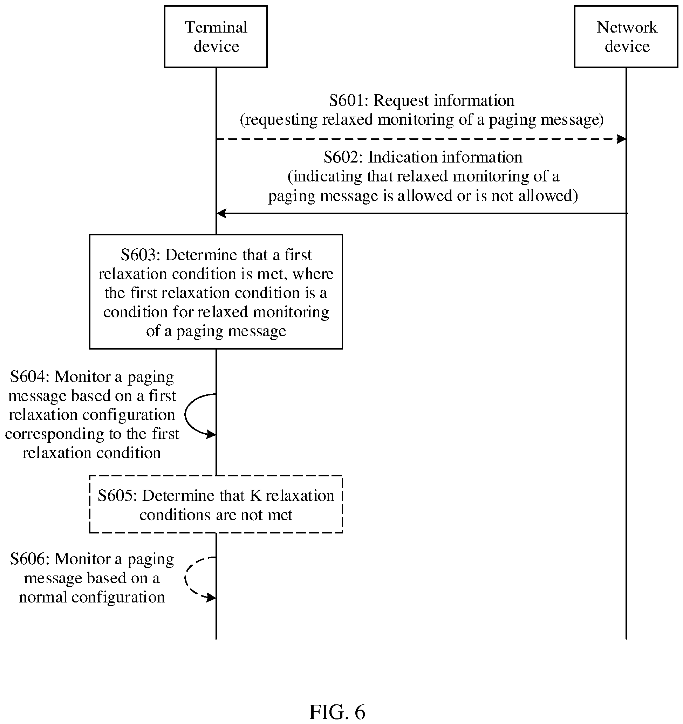

To resolve a same technical problem, an embodiment of this application provides a fourth communication method. FIG. 6 is a flowchart of the method. In the following description process, an example in which the method is applied to the network architecture shown in FIG. 2 is used. In this embodiment of this application, for example, a terminal device is in an RRC inactive state or an RRC idle state, and the following paging may be considered as paging initiated by a core network device or paging initiated by an access network device.

For ease of description, the following uses an example in which the method is performed by a network device and the terminal device. For example, this embodiment of this application is applied to the network architecture shown in FIG. 2. Therefore, the following network device may be the access network device or the core network device in the network architecture shown in FIG. 2, and the following terminal device may be the terminal device in the network architecture shown in FIG. 2.

S601: The terminal device sends request information to the network device, and the network device receives the request information from the terminal device. The request information may be used to request relaxed monitoring of a paging message.

If the network device is a core network device, the terminal device may send the request information to the network device by using a NAS message. For example, the NAS message is a registration request message, or may be another NAS message. Alternatively, if the network device is an access network device, the terminal device may send the request information to the network device by using an RRC message or another message. For example, the RRC message is a message used by the terminal device to send assistance information to the network device, for example, a UE assistance information message. In this embodiment of this application, for example, the assistance information includes a configuration expected by the terminal device, or includes service information of the terminal device, or includes the configuration expected by the terminal device and the service information of the terminal device. The service information of the terminal device includes, for example, a parameter of a service that is being performed by the terminal device, for example, a type or required bandwidth of the service that is being performed by the terminal device. The configuration expected by the terminal device is, for example, an air interface configuration expected by the terminal device, for example, a slot format expected by the terminal device.

Alternatively, the terminal device may not send the request information to the network device. Therefore, S601 is an optional step, and therefore is represented by a dashed line in FIG. 6.

S602: The network device sends indication information, and the terminal device receives the indication information from the network device. The indication information may indicate that relaxed monitoring of a paging message is allowed or relaxed monitoring of a paging message is not allowed.

If the network device is a core network device, the core network device may send the indication information to the terminal device by using a NAS message. If the terminal device sends the request information to the network device by using a registration request message, the NAS message used by the core network device to send the indication information is, for example, a registration accept message. The registration accept message may be further used to configure an eDRX-related parameter for the terminal device, for example, configure an eDRX cycle.

Alternatively, if the network device is an access network device, the access network device may send the indication information to the terminal device by using an RRC message or another message. For example, the RRC message is an RRC release message used to release the terminal device to an RRC inactive state or an RRC idle state.

Alternatively, if the network device is an access network device, the access network device may send the indication information by using a broadcast message. For example, if S601 is not performed, and the access network device is to send the indication information to a plurality of terminal devices in a cell, the access network device may send the indication information by using the broadcast message. For example, the broadcast message is a system message, or may be another message.

In an optional implementation, the indication information may explicitly indicate that relaxed monitoring of a paging message is allowed or relaxed monitoring of a paging message is not allowed. For example, the indication information occupies one or more bits (bit), and the one or more bits may indicate that relaxed monitoring of a paging message is allowed, or indicate that relaxed monitoring of a paging message is not allowed. For example, the indication information occupies 1 bit. If a value of the 1 bit is "1", it indicates that relaxed monitoring of a paging message is allowed, or if a value of the 1 bit is "0", it indicates that relaxed monitoring of a paging message is not allowed. Alternatively, if a value of the 1 bit is "0", it indicates that relaxed monitoring of a paging message is allowed, or if a value of the 1 bit is "1", it indicates that relaxed monitoring of a paging message is not allowed.

In this implementation, the network device may further send configuration information, and the terminal device may receive the configuration information from the network device. The configuration information may be configured by the network device. The network device may send the indication information and the configuration information by using one message, or may separately send the indication information and the configuration information by using different messages. If the network device separately sends the indication information and the configuration information by using different messages, the network device may send the indication information before the configuration information, or may send the configuration information before the indication information, or may simultaneously send the indication information and the configuration information. Certainly, if the indication information indicates that relaxed monitoring of a paging message is allowed, the network device may send the configuration information; or if the indication information indicates that relaxed monitoring of a paging message is not allowed, the network device may not need to send the configuration information.

The configuration information may include one or more of the following: information about M relaxation conditions, information about N relaxation configurations, or a correspondence between the M relaxation conditions and the N relaxation configurations. For example, the configuration information includes the information about the M relaxation conditions; or the configuration information includes the information about the N relaxation configurations; or the configuration information includes the correspondence between the M relaxation conditions and the N relaxation configurations; or the configuration information includes the information about the M relaxation conditions and the information about the N relaxation configurations; or the configuration information includes the information about the M relaxation conditions and the correspondence between the M relaxation conditions and the N relaxation configurations; or the configuration information includes the information about the N relaxation configurations and the correspondence between the M relaxation conditions and the N relaxation configurations; or the configuration information includes the information about the M relaxation conditions, the information about the N relaxation configurations, and the correspondence between the M relaxation conditions and the N relaxation configurations. One of the M relaxation conditions may correspond to one or more of the N relaxation configurations, and each of the N relaxation configurations may correspond to one of the M relaxation conditions. Therefore, M is greater than or equal to N, where both M and N are integers greater than or equal to 1. The relaxation condition is a condition for relaxed monitoring of a paging message, and the relaxation configuration is a configuration for monitoring a paging message by the terminal device. A quantity of times that the terminal device monitors a paging message in the relaxation configuration is less than a quantity of times that the terminal device monitors a paging message in a normal configuration, and therefore it is referred to as a "relaxation configuration". In other words, power required by the terminal device to monitor a paging message in the relaxation configuration is less than power required by the terminal device to monitor a paging message in the normal configuration. Therefore, compared with a mechanism in which the terminal device normally monitors a paging message in the configuration, monitoring a paging message by the terminal device in the relaxation configuration is a "relaxation" for the terminal device, and therefore it is referred to as a relaxation configuration.

For example, M=1, that is, there is only one relaxation condition. In this case, the configuration information may include the relaxation condition and the N relaxation configurations, and does not need to include a correspondence between the relaxation condition and the N relaxation configurations, because the relaxation condition naturally corresponds to the N relaxation configurations. For another example, N=1, that is, there is only one relaxation configuration. In this case, the configuration information may include the M relaxation conditions and the relaxation configuration, and does not need to include a correspondence between the M relaxation conditions and the relaxation configuration, because the relaxation configuration naturally corresponds to all the M relaxation conditions. For still another example, M> 1 and N> 1. In this case, the configuration information may include the M relaxation conditions, the N relaxation configurations, and the correspondence between the M relaxation conditions and the N relaxation configurations, so that the terminal device determines which relaxation condition corresponds to which relaxation configuration.

Alternatively, one or more of the M relaxation conditions, the N relaxation configurations, or the correspondences between the relaxation conditions and the relaxation configurations (that is, content included in the foregoing configuration information) may be preconfigured in the network device and the terminal device, or may be specified in a protocol. In this case, the network device does not need to send the configuration information to the terminal device. This helps reduce signaling overheads.

In another optional implementation, the indication information may implicitly indicate that relaxed monitoring of a paging message is allowed. For example, the indication information is the configuration information. In this case, the configuration information may be referred to as configuration information, or may be referred to as indication information. The configuration information may implicitly indicate that relaxed monitoring of a paging message is allowed. In other words, the network device implicitly indicates, by sending the configuration information, that relaxed monitoring of a paging message is allowed. In this way, even if the terminal device can learn of the correspondence between the relaxation conditions and the relaxation configurations, the terminal device does not need to send additional information as the indication information. This helps reduce signaling overheads.

S603: The terminal device determines that a first relaxation condition is met, where the first relaxation condition is a condition for relaxed monitoring of a paging message. For example, the M relaxation conditions are described in S602, and the first relaxation condition may include one or more of the M relaxation conditions. If the first relaxation condition includes one relaxation condition, in S603, the terminal device determines that the relaxation condition is met. Alternatively, if the first relaxation condition includes a plurality of relaxation conditions, S603 may be that the terminal device determines that all of the plurality of relaxation conditions are met. In other words, only when each of the plurality of relaxation conditions is met, the terminal device considers that the first relaxation condition is met. Alternatively, if the first relaxation condition includes a plurality of relaxation conditions, S603 may be that the terminal device determines that some of the plurality of relaxation conditions are met. In other words, when some of the plurality of relaxation conditions are met, the terminal device considers that the first relaxation condition is met. For example, if a quantity of relaxation conditions that are met is greater than or equal to 50% of a quantity of the plurality of relaxation conditions, the terminal device considers that the first relaxation condition is met.

If the terminal device determines that the indication information indicates that relaxed monitoring of a paging message is allowed, S603 may be performed. If the terminal device determines that the indication information indicates that relaxed monitoring of a paging message is not allowed, S603 does not need to be performed.

The first relaxation condition includes, for example, one or more of the following: a change value of a measured value obtained by measuring a reference signal in first duration is less than a first threshold, a measured value obtained by measuring a reference signal in second duration is greater than a second threshold, or a location of the terminal device is fixed. If the first relaxation condition includes one relaxation condition, the relaxation condition may include one or more of the foregoing relaxation conditions. Alternatively, if the first relaxation condition includes a plurality of relaxation conditions, any one of the plurality of relaxation conditions may include one or more of the foregoing relaxation conditions, and different relaxation conditions in the plurality of relaxation conditions may include same or different content. For example, the first relaxation condition includes: The change value of the measured value obtained by measuring the reference signal in the first duration is less than the first threshold. Alternatively, the first relaxation condition includes: The measured value obtained by measuring the reference signal in the second duration is greater than the second threshold. Alternatively, the first relaxation condition includes: The location of the terminal device is fixed. Alternatively, the first relaxation condition includes: The change value of the measured value obtained by measuring the reference signal in the first duration is less than the first threshold, and the measured value obtained by measuring the reference signal in the second duration is greater than the second threshold. Alternatively, the first relaxation condition includes: The change value of the measured value obtained by measuring the reference signal in the first duration is less than the first threshold, and the location of the terminal device is fixed. Alternatively, the first relaxation condition may include another condition. This is not specifically limited, provided that the first relaxation condition can indicate that a state of the terminal device is stable, or indicate that a channel condition of the terminal device is good.

The first duration may be equal to the second duration, or may not be equal to the second duration. The reference signal is, for example, a channel state information reference signal (channel-state information reference signal, CSI-RS) or a synchronization signal and physical broadcast channel block (synchronization signal and physical broadcast channel block, SSB). The measured value is, for example, a reference signal received power (reference signal receiving power, RSRP), a reference signal received quality (reference signal receiving quality, RSRQ), or a signal-to-noise ratio (signal-to-noise ratio, SNR).

For example, the first relaxation condition includes: The change value of the measured value obtained by measuring the reference signal in the first duration is less than the first threshold, and the measured value is an RSRP. In this case, the terminal device may normally measure the reference signal in the first duration. For example, the terminal device may calculate a difference between RSRPs obtained in every two adjacent measurement processes, or the terminal device may calculate, at an interval of a period of time, a difference between RSRPs obtained in two current adjacent measurement processes. In this case, the terminal device may obtain one or more differences for the RSRP obtained in the first duration. If the one or more differences are all less than the first threshold, the terminal device may determine that the change value of the measured value obtained by measuring the reference signal in the first duration is less than the first threshold. In this case, if the first relaxation condition includes one relaxation condition, the terminal device determines that the first relaxation condition is met; or if the first relaxation condition includes a plurality of relaxation conditions, and a first duration condition corresponds to a first relaxation sub-condition included in the first relaxation condition, the terminal device determines that the first relaxation sub-condition is met. Alternatively, if more than 50% of the plurality of differences are less than the first threshold, the terminal device may determine that the change value of the measured value obtained by measuring the reference signal in the first duration is less than the first threshold. In this case, if the first relaxation condition includes one relaxation condition, the terminal device determines that the first relaxation condition is met; or if the first relaxation condition includes a plurality of relaxation conditions, and a first duration condition corresponds to a first relaxation sub-condition included in the first relaxation condition, the terminal device determines that the first relaxation sub-condition is met.

For another example, the first relaxation condition includes: The measured value obtained by measuring the reference signal in the second duration is greater than the second threshold, and the measured value is an RSRQ. The terminal device may normally measure the reference signal in the second duration, to obtain one or more RSRQs. If the one or more RSRQs are all greater than the second threshold, the terminal device may determine that the measured value obtained by measuring the reference signal in the second duration is greater than the second threshold. In this case, if the first relaxation condition includes one relaxation condition, the terminal device determines that the first relaxation condition is met; or if the first relaxation condition includes a plurality of relaxation conditions, and a first duration condition corresponds to a second relaxation sub-condition included in a second relaxation condition, the terminal device determines that the second relaxation sub-condition is met. Alternatively, if more than 50% of the one or more RSRQs are greater than the second threshold, the terminal device may determine that the measured value obtained by measuring the reference signal in the second duration is greater than the second threshold. In this case, if the first relaxation condition includes one relaxation condition, the terminal device determines that the first relaxation condition is met; or if the first relaxation condition includes a plurality of relaxation conditions, the first duration condition corresponds to a second relaxation sub-condition included in a second relaxation condition, the terminal device determines that the second relaxation sub-condition is met. Alternatively, if a mean (an arithmetic mean or a weighted mean) of the one or more RSRQs is greater than the second threshold, the terminal device may determine that the measured value obtained by measuring the reference signal in the second duration is greater than the second threshold. In this case, if the first relaxation condition includes one relaxation condition, the terminal device determines that the first relaxation condition is met; or if the first relaxation condition includes a plurality of relaxation conditions, and a first duration condition corresponds to a second relaxation sub-condition included in the second relaxation condition, the terminal device determines that the second relaxation sub-condition is met. The second relaxation sub-condition and the first relaxation sub-condition may be a same relaxation condition, or may be different relaxation conditions.

The first relaxation condition can indicate that a state of the terminal device is stable, or indicate that a channel condition of the terminal device is good. Such a terminal device can correctly receive a paging message by monitoring a paging message only for a small quantity of times. Therefore, the paging message does not need to be monitored for an excessively large quantity of times. In this case, the terminal device that meets the first relaxation condition may perform relaxed monitoring of a paging message, to reduce power consumption.

S604: The terminal device monitors a paging message based on a first relaxation configuration corresponding to the first relaxation condition. A quantity of times that the terminal device monitors a paging message in the relaxation configuration corresponding to the first relaxation condition is less than the quantity of times that the terminal device monitors a paging message in the normal configuration.

This embodiment of this application provides the M relaxation conditions, and relaxation configurations corresponding to different relaxation conditions may be the same or may be different. For example, K relaxation conditions include a relaxation condition 1, and further include a relaxation condition 2. The relaxation condition 1 corresponds to a relaxation configuration 1, and the relaxation condition 2 corresponds to a relaxation configuration 2. The relaxation configuration 1 may be the same as or different from the relaxation configuration 2. The terminal device may periodically or aperiodically determine whether one or more of the K relaxation conditions are met. If one of the K relaxation conditions is met, the terminal device may monitor a paging message based on a relaxation configuration corresponding to the relaxation condition. Alternatively, if a plurality of the K relaxation conditions are met, the terminal device may monitor a paging message based on a relaxation configuration corresponding to one of the plurality of relaxation conditions. The K relaxation conditions include some or all of the M relaxation conditions, and K is an integer greater than or equal to 1 and less than or equal to M. In S603 and S604, an example in which the terminal device meets the first relaxation condition and monitors a paging message based on the first relaxation configuration corresponding to the first relaxation condition is used. The first relaxation condition includes, for example, one or more of the K relaxation conditions.

The first relaxation condition belongs to the K relaxation conditions, and naturally also belongs to the M relaxation conditions, and the first relaxation configuration belongs to the N relaxation configurations. In other words, a correspondence between the first relaxation condition and the first relaxation configuration is sent by the network device to the terminal device, or is preconfigured in the terminal device, or is specified in a protocol. If it is determined that the terminal device meets the first relaxation condition, the terminal device may determine the first relaxation configuration corresponding to the first relaxation condition.

If the first relaxation condition includes one relaxation condition, and the relaxation condition corresponds to one relaxation configuration, the first relaxation configuration is the relaxation configuration corresponding to the relaxation condition. Alternatively, as described above, one relaxation condition may correspond to one or more relaxation configurations. If the first relaxation condition corresponds to a plurality of relaxation configurations, the terminal device may determine one of the plurality of relaxation configurations. For example, the terminal device determines the first relaxation configuration.

Alternatively, if the first relaxation condition includes a plurality of relaxation conditions, and the plurality of relaxation conditions correspond to a same relaxation configuration, the first relaxation configuration is the relaxation configuration corresponding to the plurality of relaxation conditions. Alternatively, if the plurality of relaxation conditions correspond to different relaxation configurations, or at least two of the plurality of relaxation conditions correspond to different relaxation configurations, the first relaxation configuration may be one of the relaxation configurations corresponding to the plurality of relaxation conditions. For example, if relaxation configurations corresponding to the plurality of relaxation conditions are all different, or relaxation configurations corresponding to at least two of the plurality of relaxation conditions are different, the terminal device may select a relaxation configuration corresponding to any one of the plurality of relaxation conditions as the first relaxation configuration.

The first relaxation configuration includes, for example, one or more of third duration, a first quantity, first sequence number information, or a first cycle. For example, the first relaxation configuration includes the third duration; or the first relaxation configuration includes the first quantity; or the first relaxation configuration includes the first sequence number information; or the first relaxation configuration includes the first cycle; or the first relaxation configuration includes the third duration and the first quantity; or the first relaxation configuration includes the third duration and the first cycle; or the first relaxation configuration includes the first quantity and the first cycle; or the first relaxation configuration includes the third duration, the first quantity, and the first cycle. The third duration is duration of a paging transmission window, the first quantity is a quantity of POs that need to be monitored by the terminal device in a paging transmission window, the first sequence number information is a sequence number (or referred to as an index, a number, or the like) of a PO that needs to be monitored by the terminal device in a paging transmission window, and the first cycle is a cycle in which the terminal device monitors a PO in a paging transmission window. Duration of the first cycle may be an integer multiple of an interval between two consecutive POs in the paging transmission window. Certainly, the first relaxation configuration determined by the core network device may further include other information. This is not specifically limited.

For example, the first relaxation configuration includes the third duration, the third duration may be less than fourth duration, and the fourth duration is duration of a PTW in the normal configuration. For another example, the first relaxation configuration includes the first quantity, the first quantity may be less than a second quantity, and the second quantity is a quantity of POs included in a PTW in the normal configuration, or a quantity of POs that need to be monitored by the terminal device in a PTW in the normal configuration. For example, the first quantity of POs may be the first N POs or the last N POs (in a time domain order) included in a PTW in the normal configuration, where N is the first quantity. For another example, a time interval (for example, referred to as a first time interval) between every two POs that are consecutive in time domain in the first quantity of POs is greater than a time interval (for example, referred to as a second time interval) between every two POs that are consecutive in time domain in the second quantity of POs. For another example, the first relaxation configuration includes the first sequence number information, and sequence numbers indicated by the first sequence number information may include sequence numbers of some POs included in a PTW in the normal configuration. For example, the sequence numbers indicated by the first sequence number information may include sequence numbers of the first half of POs in the PTW, but do not include sequence numbers of the second half of POs in the PTW; or include sequence numbers of the first and last POs in the PTW, but do not include sequence numbers of other POs in the PTW. It should be emphasized that the PO sequence numbers included herein are indicated by a network to UE, but specific PO sequence numbers indicated to the UE are not limited. For still another example, the first relaxation configuration includes the first cycle, and duration of the first cycle may be greater than a time interval between two consecutive POs included in a PTW in the normal configuration. For example, the first cycle may be K times the time interval between the two consecutive POs included in the PTW in the normal configuration, where K is an integer greater than or equal to 2.

In any embodiment of this application, sequence numbers of some POs may include sequence numbers of the first half of POs in a PTW, but do not include sequence numbers of the second half of POs in the PTW; or include sequence numbers of the first and last POs in the PTW, but do not include sequence numbers of other POs in the PTW. It should be emphasized that the PO sequence numbers included herein are indicated by a network to UE, but specific PO sequence numbers indicated to the UE are not limited.

Regardless of whether the first relaxation configuration includes the third duration, the first quantity, the first sequence number information, or the first cycle, a function thereof can reduce a quantity of times that the terminal device monitors a PO. Therefore, it may be considered that the quantity of times that the terminal device monitors a paging message in the first relaxation configuration is less than the quantity of times that the terminal device monitors a paging message in the normal configuration.

The network device may send a paging message based on the first relaxation configuration or in a normal manner. Alternatively, the terminal device performs relaxed monitoring when determining that a relaxation condition is met, and the network device does not know whether the terminal device meets a corresponding relaxation condition, and therefore does not know whether the terminal device performs relaxed monitoring. In this case, a good manner is that the network device sends a paging message on each PO. For example, if a normal sending manner is used, a paging message sent by the network device to the terminal device originally starts to be sent on the second PO in a paging transmission window. However, if the terminal device performs relaxed monitoring, the terminal device may monitor only the first PO in the paging transmission window. In this case, the terminal device cannot detect the paging message. To ensure that the terminal device can receive the paging message as much as possible, the network device may send the paging message for the terminal device in each PO in a paging transmission window, to improve a success rate of receiving the paging message by the terminal device.

For example, if the first relaxation configuration includes the third duration, the terminal device may monitor a paging message based on a paging transmission window of the third duration. For another example, if the first relaxation configuration includes the first quantity, the terminal device needs to monitor only the first quantity of POs in a paging transmission window. POs to be monitored by the terminal device may be determined by the terminal device, indicated by the network device, specified in a protocol, or the like. For still another example, if the first relaxation configuration includes the first sequence number information, the terminal device needs to monitor, in a paging transmission window, only a PO indicated by the first sequence number information. For yet another example, if the first relaxation configuration includes the first cycle, the terminal device may monitor a PO in a paging transmission window based on the first cycle.

S605: The terminal device determines that the K relaxation conditions are not met. That the K relaxation conditions are not met herein means that none of the K relaxation conditions is met, or any one of the K relaxation conditions is not met. The K relaxation conditions include some or all of the M relaxation conditions.

S606: The terminal device monitors a paging message based on the normal configuration.

S605 and S606 are optional steps, are not necessarily performed, and therefore are represented by dashed lines in FIG. 6.

In this embodiment of this application, the terminal device may periodically or aperiodically determine whether the K relaxation conditions are met. For example, after determining that the first relaxation condition is met, the terminal device monitors a paging message based on the first relaxation configuration corresponding to the first relaxation condition. Then, if the terminal device determines that a second relaxation condition in the K relaxation conditions is met, the terminal device may monitor a paging message based on a second relaxation configuration corresponding to the second relaxation condition instead. Alternatively, after determining that the K relaxation conditions are not met, that is, none of the K relaxation conditions is met, the terminal device may resume normal monitoring of a paging message. In other words, the terminal device may monitor a paging message based on the normal configuration, to reduce a probability of missed detection of a paging message.

In this embodiment of this application, if the first relaxation condition is met, the terminal device may monitor a paging message based on the first relaxation configuration. The quantity of times that the terminal device monitors a paging message in the first relaxation configuration is less than the quantity of times that the terminal device monitors to a paging message in the normal configuration. Because the quantity of times that the terminal device monitors a paging message is reduced, power consumption of the terminal device can be reduced. In addition, whether a relaxation condition is met can be determined by the terminal device, and does not need to be indicated by a network device, so that a determining manner is more flexible.

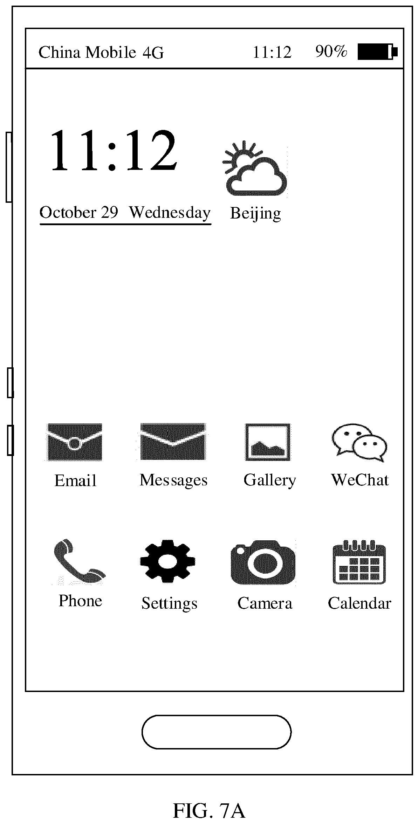

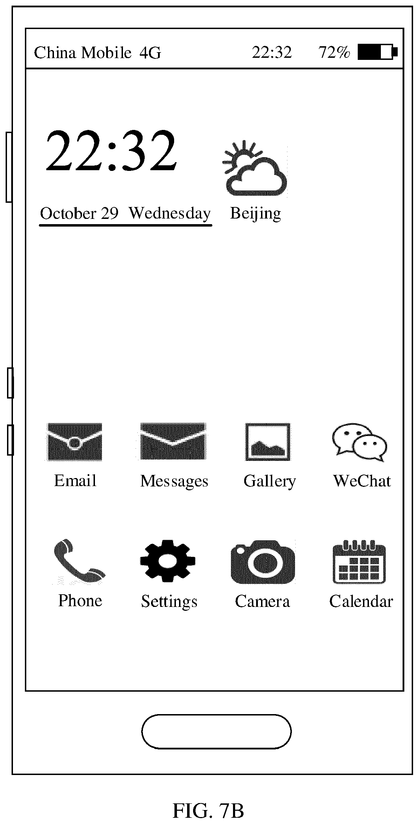

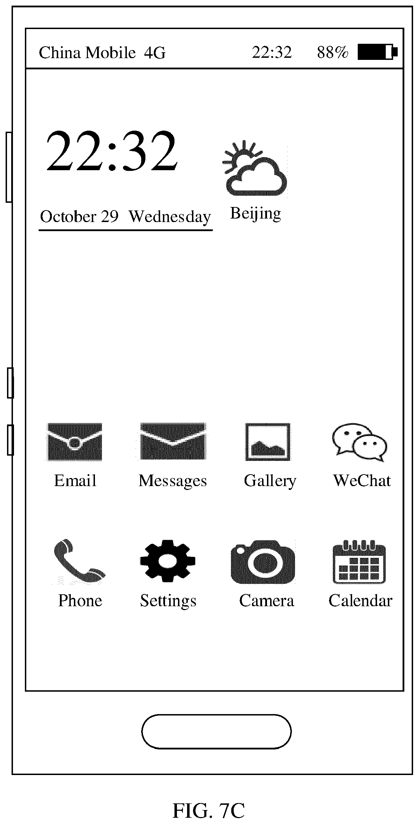

An actual application scenario of this embodiment of this application is considered. For example, when a user does not use the terminal device (for example, a device such as a smartphone, a smartwatch, or a smart band), a lot of power of the terminal device is still reduced after a period of time. This is because even if the terminal device is in an RRC idle state or an RRC inactive state and has no data to transmit, the terminal device needs to wake up to monitor a PO, and many monitoring is useless. Consequently, the terminal device consumes extra power, power is reduced faster, and a battery life deteriorates. FIG. 7A shows remaining power of the terminal device used by the user at a first moment, for example, 90%. According to a current solution, although the user does not use the terminal device within duration A starting from the first moment, remaining power of the terminal device changes to, for example, 72% at a second moment. Refer to FIG. 7B. The first moment is a start moment of the duration A, and the second moment is an end moment of the duration A. It can be learned that even if the user does not use the terminal device within the duration A, a lot of power of the terminal device is consumed. This is because the terminal device needs to wake up to monitor a PO. In this case, the method provided in this embodiment of this application may be used, to save power of the terminal device and improve a battery life of the terminal device. For example, refer to FIG. 7C. After the method provided in this embodiment of this application is used, if the user does not use the terminal device within the duration A, the remaining power of the terminal device at the second moment is, for example, 88%. It is clearly that compared with the current solution, the method provided in this embodiment of this application can save power of the terminal device.

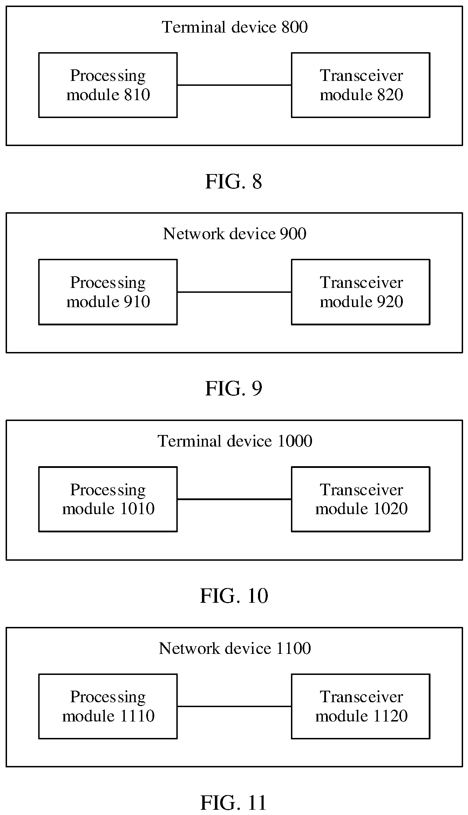

FIG. 8 is a schematic block diagram of a communications apparatus 800 according to an embodiment of this application. For example, the communications apparatus 800 is a terminal device 800.

The terminal device 800 includes a processing module 810 and a transceiver module 820. For example, the terminal device 800 may be a terminal device, or may be a chip used in the terminal device or another combined device or a component that has the functions of the terminal device. When the terminal device 800 is the terminal device, the transceiver module 820 may be a transceiver. The transceiver may include an antenna, a radio frequency circuit, and the like. The processing module 810 may be a processor, for example, a baseband processor. The baseband processor may include one or more central processing units (central processing unit, CPU). When the terminal device 800 is the component that has the functions of the terminal device, the transceiver module 820 may be a radio frequency unit, and the processing module 810 may be a processor, for example, a baseband processor. When the terminal device 800 is a chip system, the transceiver module 820 may be an input/output interface of a chip (for example, a baseband chip), and the processing module 810 may be a processor of the chip system, and may include one or more central processing units. It should be understood that, in this embodiment of this application, the processing module 810 may be implemented as a processor or a processor-related circuit component, and the transceiver module 820 may be implemented as a transceiver or a transceiver-related circuit component.

For example, the processing module 810 may be configured to perform all operations, except receiving and sending operations, performed by the terminal device in the embodiment shown in FIG. 3, for example, S301, and/or configured to support another process of the technology described in this specification. The transceiver module 820 may be configured to perform all the receiving and sending operations performed by the terminal device in the embodiment shown in FIG. 3, for example, S302, S304, and S306, and/or configured to support another process of the technology described in this specification.

For another example, the processing module 810 may be configured to perform all operations, except receiving and sending operations, performed by the terminal device in the embodiment shown in FIG. 4, for example, S401, and/or configured to support another process of the technology described in this specification. The transceiver module 820 may be configured to perform all the receiving and sending operations performed by the terminal device in the embodiment shown in FIG. 4, for example, S402, S404, S406, and S407, and/or configured to support another process of the technology described in this specification.

For still another example, the processing module 810 may be configured to perform all operations, except receiving and sending operations, performed by the terminal device in the embodiment shown in FIG. 5, for example, S501, and/or configured to support another process of the technology described in this specification. The transceiver module 820 may be configured to perform all the receiving and sending operations performed by the terminal device in the embodiment shown in FIG. 5, for example, S502, S505, S507, and S510, and/or configured to support another process of the technology described in this specification.

In addition, the transceiver module 820 may be one function module. The function module can implement both a sending operation and a receiving operation. For example, the transceiver module 820 may be configured to perform all sending operations and receiving operations performed by the terminal device in any one of the embodiments shown in FIG. 3 to FIG. 5. For example, when a sending operation is performed, it may be considered that the transceiver module 820 is a sending module, and when a receiving operation is performed, it may be considered that the transceiver module 820 is a receiving module. Alternatively, the transceiver module 820 may be two function module, and the transceiver module 820 may be considered as a general term of the two function modules. The two function modules are a sending module and a receiving module. The sending module is configured to implement a sending operation. For example, the sending module may be configured to perform all sending operations performed by the terminal device in any one of the embodiments shown in FIG. 3 to FIG. 5. The receiving module is configured to implement a receiving operation. For example, the receiving module may be configured to perform all receiving operations performed by the terminal device in any one of the embodiments shown in FIG. 3 to FIG. 5.

The processing module 810 is configured to determine assistance information, where the assistance information is used to determine a paging parameter configured for the terminal device.

The transceiver module 820 is configured to send the assistance information.

In an optional implementation, the assistance information includes one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

In an optional implementation,
the transceiver module 820 is further configured to receive first configuration information and/or second configuration information; and
the processing module 810 is further configured to monitor a paging message based on third configuration information, where the third configuration information is determined based on received configuration information.

In an optional implementation, the first configuration information includes first duration and/or a first quantity, the second configuration information includes second duration and/or a second quantity, the first duration and the second duration each are duration of a paging transmission window, and the first quantity and the second quantity each are a quantity of paging occasions that need to be monitored in a paging transmission window.

In an optional implementation,
the third configuration information includes third duration, the third duration is a larger value or a smaller value in the first duration and the second duration, and the third duration is duration of a paging transmission window; and/or
the third configuration information includes a third quantity, the third quantity is a larger value or a smaller value in the first quantity and the second quantity, and the third quantity is a quantity of paging occasions that need to be monitored in a paging transmission window.

For other functions that can be implemented by the terminal device 800, refer to related descriptions of any one of embodiments shown in FIG. 3 to FIG. 5. Details are not described again.

FIG. 9 is a schematic block diagram of a communications apparatus 900 according to an embodiment of this application. For example, the communications apparatus 900 is a network device 900.

The network device 900 includes a processing module 910 and a transceiver module 920. For example, the network device 900 may be a network device, or may be a chip used in the network device or another combined device or a component that has the functions of the network device. When the network device 900 is the network device, the transceiver module 920 may be a transceiver. The transceiver may include an antenna, a radio frequency circuit, and the like. The processing module 910 may be a processor, for example, a baseband processor. The baseband processor may include one or more CPUs. When the network device 900 is the component that has the functions of the network device, the transceiver module 920 may be a radio frequency unit, and the processing module 910 may be a processor, for example, a baseband processor. When the network device 900 is a chip system, the transceiver module 920 may be an input/output interface of a chip (for example, a baseband chip), and the processing module 910 may be a processor of the chip system, and may include one or more central processing units. It should be understood that in this embodiment of this application, the processing module 910 may be implemented as a processor or a processor-related circuit component, and the transceiver module 920 may be implemented as a transceiver or a transceiver-related circuit component.

For example, the processing module 910 may be configured to perform all operations, except receiving and sending operations, performed by the network device in the embodiment shown in FIG. 3, for example, S303, and/or configured to support another process of the technology described in this specification. The transceiver module 920 may be configured to perform all the receiving and sending operations performed by the network device in the embodiment shown in FIG. 3, for example, S302, S304, and S305, and/or configured to support another process of the technology described in this specification.

For another example, the processing module 910 may be configured to perform all operations, except receiving and sending operations, performed by the network device in the embodiment shown in FIG. 4, for example, S61 to S67, and/or configured to support another process of the technology described in this specification. The transceiver module 920 may be configured to perform all the receiving and sending operations performed by the network device in the embodiment shown in FIG. 4, for example, S402 to S404, and S406, and/or configured to support another process of the technology described in this specification.

For still another example, the processing module 910 may be configured to perform all operations, except receiving and sending operations, performed by the network device in the embodiment shown in FIG. 5, for example, S61 to S67, and/or configured to support another process of the technology described in this specification. The transceiver module 920 may be configured to perform all the receiving and sending operations performed by the network device in the embodiment shown in FIG. 5, for example, S502, S503, S505, and S507 to S509, and/or configured to support another process of the technology described in this specification.

In addition, for an implementation of the transceiver module 920, refer to the descriptions of the implementation of the transceiver module 820.

The transceiver module 920 is configured to receive assistance information, where the assistance information is used to determine a paging parameter configured for a terminal device.

The processing module 910 is configured to determine first configuration information based on the assistance information, where the first configuration information is used by the terminal device to monitor a paging message.

The transceiver module 920 is further configured to send the first configuration information.

In an optional implementation, the transceiver module 920 is further configured to:
send a paging message based on the first configuration information; or
receive second configuration information, determine third configuration information based on the first configuration information and the second configuration information, and send a paging message based on the third configuration information.

In an optional implementation, the first configuration information includes first duration and/or a first quantity, the second configuration information includes second duration and/or a second quantity, the first duration and the second duration each are duration of a paging transmission window, and the first quantity and the second quantity each are a quantity of paging occasions that need to be monitored in a paging transmission window.

In an optional implementation,
the third configuration information includes third duration, the third duration is a larger value or a smaller value in the first duration and the second duration, and the third duration is duration of a paging transmission window; and/or
the third configuration information includes a third quantity, the third quantity is a larger value or a smaller value in the first quantity and the second quantity, and the third quantity is a quantity of paging occasions that need to be monitored in a paging transmission window.

In an optional implementation, the assistance information includes one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

In an optional implementation, the network device is a core network device, and the transceiver module 920 is further configured to send the assistance information and the first configuration information to an access network device serving the terminal device.

In an optional implementation, the network device is an access network device, and the transceiver module 920 is further configured to send the first relaxation configuration to a core network device serving the terminal device.

For other functions that can be implemented by the network device 900, refer to related descriptions of any one of embodiments shown in FIG. 3 to FIG. 5. Details are not described again.

FIG. 10 is a schematic block diagram of a communications apparatus 1000 according to an embodiment of this application. For example, the communications apparatus 1000 is a terminal device 1000.

The terminal device 1000 includes a processing module 1010 and a transceiver module 1020. For example, the terminal device 1000 may be a terminal device, a chip used in the terminal device, or another combined device or a component that has functions of the terminal device. When the terminal device 1000 is the terminal device, the transceiver module 1020 may be a transceiver. The transceiver may include an antenna, a radio frequency circuit, and the like. The processing module 1010 may be a processor, for example, a baseband processor. The baseband processor may include one or more CPUs. When the terminal device 1000 is the component that has the functions of the terminal device, the transceiver module 1020 may be a radio frequency unit, and the processing module 1010 may be a processor, for example, a baseband processor. When the terminal device 1000 is a chip system, the transceiver module 1020 may be an input/output interface of a chip (for example, a baseband chip), and the processing module 1010 may be a processor of the chip system, and may include one or more central processing units. It should be understood that, in this embodiment of this application, the processing module 1010 may be implemented as a processor or a processor-related circuit component, and the transceiver module 1020 may be implemented as a transceiver or a transceiver-related circuit component.

For example, the processing module 1010 may be configured to perform all operations, except receiving and sending operations, performed by the terminal device in the embodiment shown in FIG. 6, for example, S603 and S605, and/or configured to support another process of the technology described in this specification. The transceiver module 1020 may be configured to perform all the receiving and sending operations performed by the terminal device in the embodiment shown in FIG. 6, for example, S601, S602, S604, and S606, and/or configured to support another process of the technology described in this specification.

In addition, for an implementation of the transceiver module 1020, refer to the descriptions of the implementation of the transceiver module 820.

The processing module 1010 is configured to determine that a first relaxation condition is met, where the first relaxation condition is a condition for relaxed monitoring of a paging message.

The transceiver module 1020 is configured to monitor a paging message based on a first relaxation configuration corresponding to the first relaxation condition, where a quantity of times that the terminal device monitors a paging message in the relaxation configuration corresponding to the first relaxation condition is less than a quantity of times that the terminal device monitors a paging message in a normal configuration.

In an optional implementation, the first relaxation condition includes one or more of the following:
a change value of a measured value obtained by measuring a reference signal in first duration is less than a first threshold;
a measured value obtained by measuring a reference signal in second duration is greater than a second threshold; or
a location of the terminal device is fixed.

In an optional implementation,
the first relaxation configuration includes third duration, the normal configuration includes fourth duration, the third duration is less than the fourth duration, and the third duration and the fourth duration each are duration of a paging transmission window; and/or
the first relaxation configuration includes a first quantity, the normal configuration includes a second quantity, the first quantity is less than the second quantity, and the first quantity and the second quantity each are a quantity of paging occasions that need to be monitored in a paging transmission window.

In an optional implementation,
the first quantity of paging occasions are the first N paging occasions in a time domain sequence in a paging transmission window, and N is the first quantity; and/or
a first time interval is greater than a second time interval, the first time interval is a time interval between every two consecutive paging occasions in the first quantity of paging occasions, and the second time interval is a time interval between every two consecutive paging occasions in the second quantity of paging occasions.

In an optional implementation, the transceiver module 1020 is further configured to receive indication information, where the indication information indicates that relaxed monitoring of a paging message is allowed.

In an optional implementation,
the indication information is carried in a broadcast message; or
the indication information is carried in an RRC message; or
the indication information is carried in a NAS message.

In an optional implementation,
the transceiver module 1020 is further configured to receive configuration information, where the configuration information is used to configure the first relaxation condition and/or the first relaxation configuration corresponding to the first relaxation condition; or
the indication information is used to configure the first relaxation condition and/or the first relaxation configuration corresponding to the first relaxation condition.

In an optional implementation, the configuration information further includes a correspondence between the first relaxation condition and the first relaxation configuration.

In an optional implementation, the transceiver module 1020 is further configured to send request information, where the request information is used to request relaxed monitoring of a paging message.

In an optional implementation,
the request information is carried in a NAS message; or
the request message is carried in an RRC message.

In an optional implementation,
the processing module 1010 is further configured to determine that K relaxation conditions are not met, where the K relaxation conditions are all relaxation conditions or some relaxation conditions, the first relaxation condition is one of the K relaxation conditions, and K is an integer greater than or equal to 1; and
the transceiver module 1020 is further configured to monitor a paging message based on the normal configuration.

In an optional implementation, the first relaxation condition is one of the K relaxation conditions, the K relaxation conditions further include a second relaxation condition, the second relaxation condition corresponds to a second relaxation configuration, the first relaxation configuration is different from the second relaxation configuration, and K is an integer greater than or equal to 1.

For other functions that can be implemented by the terminal device 1000, refer to the related descriptions in the embodiment shown in FIG. 6. Details are not described again.

FIG. 11 is a schematic block diagram of a communications apparatus 1100 according to an embodiment of this application. For example, the communications apparatus 1100 is a network device 1100.

The network device 1100 includes a processing module 1110 and a transceiver module 1120. For example, the network device 1100 may be a network device, or may be a chip used in the network device or another combined device or a component that has the functions of the network device. When the network device 1100 is the network device, the transceiver module 1120 may be a transceiver. The transceiver may include an antenna, a radio frequency circuit, and the like. The processing module 1110 may be a processor, for example, a baseband processor. The baseband processor may include one or more CPUs. When the network device 1100 is the component that has the functions of the network device, the transceiver module 1120 may be a radio frequency unit, and the processing module 1110 may be a processor, for example, a baseband processor. When the network device 1100 is a chip system, the transceiver module 1120 may be an input/output interface of a chip (for example, a baseband chip), and the processing module 1110 may be a processor of the chip system, and may include one or more central processing units. It should be understood that, in this embodiment of this application, the processing module 1110 may be implemented as a processor or a processor-related circuit component, and the transceiver module 1120 may be implemented as a transceiver or a transceiver-related circuit component.

For example, the processing module 1110 may be configured to perform all operations, except receiving and sending operations, performed by the network device in the embodiment shown in FIG. 6, for example, determining to allow or not allow the terminal device to relax monitoring of a paging message, and/or configured to support another process of the technology described in this specification. The transceiver module 1120 may be configured to perform all the receiving and sending operations performed by the network device in the embodiment shown in FIG. 6, for example, S601 and S602, and/or configured to support another process of the technology described in this specification.

In addition, for an implementation of the transceiver module 1120, refer to the descriptions of the implementation of the transceiver module 820.

The processing module 1110 is configured to determine to allow the terminal device to relax monitoring of a paging message.

The transceiver module 1120 is configured to send indication information, where the indication information indicates that relaxed monitoring of a paging message is allowed.

In an optional implementation,
the indication information is carried in a broadcast message; or
the indication information is carried in an RRC message; or
the indication information is carried in a NAS message.

In an optional implementation,
the transceiver module 1120 is further configured to send configuration information, where the configuration information is used to configure a first relaxation condition and/or a first relaxation configuration corresponding to the first relaxation condition; or
the indication information is used to configure the first relaxation condition and/or the first relaxation configuration corresponding to the first relaxation condition.

The first relaxation condition is a condition for relaxed monitoring of a paging message, and a quantity of times that the terminal device monitors a paging message in the relaxation configuration corresponding to the first relaxation condition is less than a quantity of times that the terminal device monitors a paging message in a normal configuration.

In an optional implementation, the configuration information further includes a correspondence between the first relaxation condition and the first relaxation configuration.

In an optional implementation, the transceiver module 1120 is further configured to receive request information from the terminal device, where the request information is used to request relaxed monitoring of a paging message.

In an optional implementation,
the request information is carried in a NAS message; or
the request message is carried in an RRC message.

For other functions that can be implemented by the network device 1100, refer to the related descriptions in the embodiment shown in FIG. 6. Details are not described again.

An embodiment of this application further provides a communications apparatus. The communications apparatus may be a terminal device, or may be a circuit. The communications apparatus may be configured to perform actions performed by the terminal device in the foregoing method embodiments.

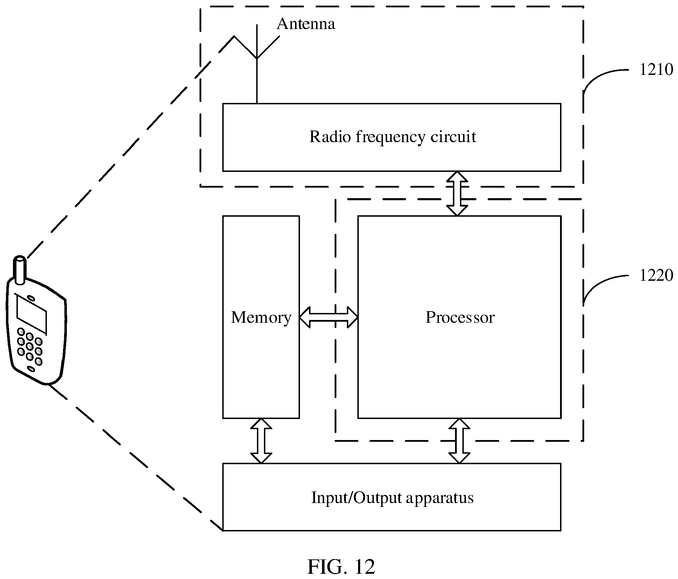

When the communications apparatus is a terminal device, FIG. 12 is a simplified schematic diagram of a structure of the terminal device. For ease of understanding and illustration, an example in which the terminal device is a mobile phone is used in FIG. 12. As shown in FIG. 12, the terminal device includes a processor, a memory, a radio frequency circuit, an antenna, and an input/output apparatus. The processor is mainly configured to: process a communications protocol and communications data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When the processor needs to send data, the processor performs baseband processing on the to-be-sent data, and outputs a baseband signal to the radio frequency circuit. After performing radio frequency processing on the baseband signal, the radio frequency circuit sends a radio frequency signal in an electromagnetic wave form by using the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the terminal device (where the transceiver unit may be one functional unit, and the functional unit can implement the sending and receiving functions; or the transceiver unit may include two functional units, namely, a receiving unit that can implement the receiving function and a sending unit that can implement the sending function), and the processor that has a processing function is considered as a processing unit of the terminal device. As shown in FIG. 12, the terminal device includes a transceiver unit 1210 and a processing unit 1220. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1210 is configured to perform a sending operation and a receiving operation on a terminal device side in the foregoing method embodiments, and the processing unit 1220 is configured to perform an operation other than the receiving and sending operations of the terminal device in the foregoing method embodiments.

For example, in an implementation, the processing unit 1210 may be configured to perform all operations, except receiving and sending operations, performed by the terminal device in the embodiment shown in FIG. 3, for example, S301, and/or configured to support another process of the technology described in this specification. The transceiver unit 1220 may be configured to perform all the receiving and sending operations performed by the terminal device in the embodiment shown in FIG. 3, for example, S302, S304, and S306, and/or configured to support another process of the technology described in this specification.

For another example, in an implementation, the processing unit 1210 may be configured to perform all operations, except receiving and sending operations, performed by the terminal device in the embodiment shown in FIG. 4, for example, S401, and/or configured to support another process of the technology described in this specification. The transceiver unit 1220 may be configured to perform all the receiving and sending operations performed by the terminal device in the embodiment shown in FIG. 4, for example, S402, S404, S406, and S407, and/or configured to support another process of the technology described in this specification.

For still another example, in an implementation, the processing unit 1210 may be configured to perform all operations, except receiving and sending operations, performed by the terminal device in the embodiment shown in FIG. 5, for example, S501, and/or configured to support another process of the technology described in this specification. The transceiver unit 1220 may be configured to perform all the receiving and sending operations performed by the terminal device in the embodiment shown in FIG. 5, for example, S502, S505, S507, and S510, and/or configured to support another process of the technology described in this specification.

For yet another example, in an implementation, the processing unit 1210 may be configured to perform all operations, except receiving and sending operations, performed by the terminal device in the embodiment shown in FIG. 6, for example, S603 and S605, and/or configured to support another process of the technology described in this specification. The transceiver unit 1220 may be configured to perform all the receiving and sending operations performed by the terminal device in the embodiment shown in FIG. 6, for example, S601, S602, S604, and S606, and/or configured to support another process of the technology described in this specification.

When the communications apparatus is a chip apparatus or circuit, the apparatus may include a transceiver unit and a processing unit. The transceiver unit may be an input/output circuit and/or a communications interface. The processing unit is an integrated processor, a microprocessor, or an integrated circuit.

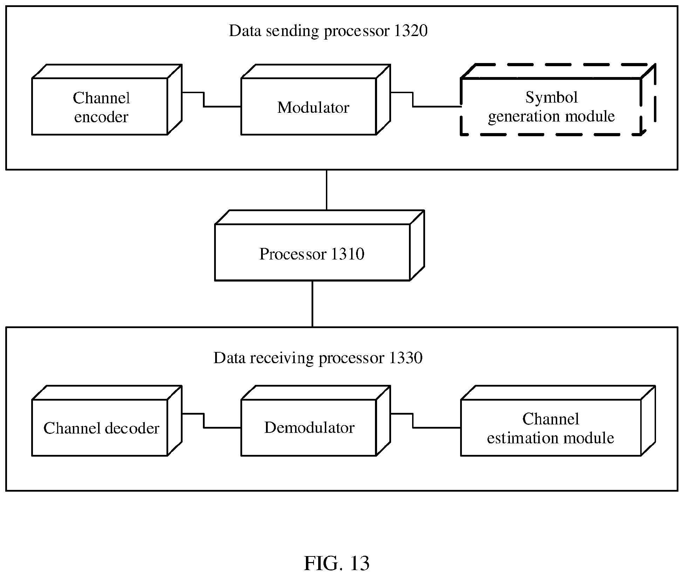

When the communications apparatus in this embodiment is a terminal device, reference may be made to a device shown in FIG. 13. In an example, the device may implement a function similar to that of the processing module 810 in FIG. 8. In another example, the device may implement a function similar to that of the processing module 1010 in FIG. 10. In FIG. 13, the device includes a processor 1310, a data sending processor 1320, and a data receiving processor 1330. The processing module 810 in the foregoing embodiment may be the processor 1310 in FIG. 13, and completes a corresponding function. The transceiver module 820 in the foregoing embodiment may be the data sending processor 1320 and/or the data receiving processor 1330 in FIG. 13, and completes a corresponding function. Alternatively, the processing module 1010 in the foregoing embodiment may be the processor 1310 in FIG. 13, and completes a corresponding function. The transceiver module 1020 in the foregoing embodiment may be the data sending processor 1320 and/or the data receiving processor 1330 in FIG. 13, and completes a corresponding function. Although FIG. 13 shows a channel encoder and a channel decoder, it can be understood that these modules are merely examples, and do not constitute a limitation on this embodiment.

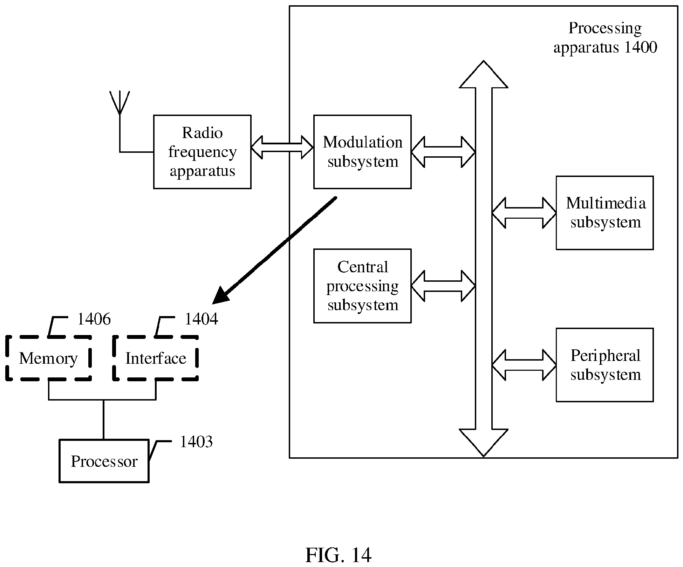

FIG. 14 shows another form of this embodiment. A processing apparatus 1400 includes modules such as a modulation subsystem, a central processing subsystem, and a peripheral subsystem. The communications apparatus in this embodiment may be used as the modulation subsystem. Specifically, the modulation subsystem may include a processor 1403 and an interface 1404. The processor 1403 implements a function of the processing module 810, and the interface 1404 implements a function of the transceiver module 820. Alternatively, the processor 1403 implements a function of the processing module 1010, and the interface 1404 implements a function of the transceiver module 1020. In another variation, the modulation subsystem includes a memory 1406, a processor 1403, and a program that is stored in the memory 1406 and that can be run on the processor. When executing the program, the processor 1403 implements the method on the terminal device side in the foregoing method embodiments. It should be noted that the memory 1406 may be nonvolatile or volatile, and may be located in the modulation subsystem, or may be located in the processing apparatus 1400, provided that the memory 1406 can be connected to the processor 1403.

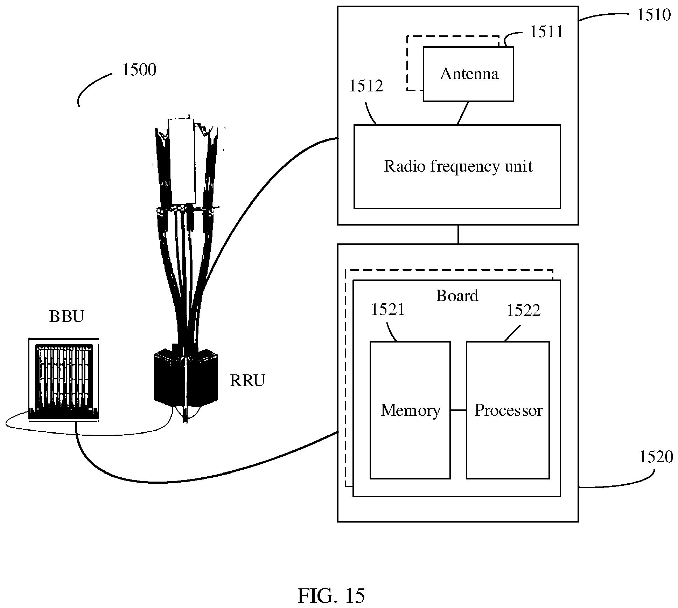

When the apparatus in this embodiment of this application is a network device, the apparatus may be shown in FIG. 15. An apparatus 1500 includes one or more radio frequency units, such as a remote radio unit (remote radio unit, RRU) 1510 and one or more baseband units (baseband unit, BBU) (which may also be referred to as digital units (digital unit, DU)) 1520. The RRU 1510 may be referred to as a transceiver module. The transceiver module may include a sending module and a receiving module, or the transceiver module may be a module that can implement sending and receiving functions. The transceiver module may correspond to the transceiver module 920 in FIG. 9, or may correspond to the transceiver module 1120 in FIG. 11. Optionally, the transceiver module may also be referred to as a transceiver machine, a transceiver circuit, a transceiver, or the like, and may include at least one antenna 1511 and a radio frequency unit 1512. The RRU 1510 is mainly configured to: receive and send a radio frequency signal, and perform conversion between the radio frequency signal and a baseband signal. For example, the RRU 1510 is configured to send indication information to a terminal device. The BBU 1520 is mainly configured to perform baseband processing, control a base station, and the like. The RRU 1510 and the BBU 1520 may be physically disposed together, or may be physically separated, that is, in a distributed base station.

The BBU 1520 is a control center of the base station, may also be referred to as a processing module, may correspond to the processing module 910 in FIG. 9, or may correspond to the processing module 1110 in FIG. 11, and is mainly configured to complete a baseband processing function, such as channel coding, multiplexing, modulation, and spectrum spreading. For example, the BBU (the processing module) may be configured to control the base station to perform an operation procedure related to the network device in the foregoing method embodiment, for example, generate the foregoing indication information.

In an example, the BBU 1520 may include one or more boards, and a plurality of boards may jointly support a radio access network (for example, an LTE network) in a single access standard, or may separately support radio access networks (for example, an LTE network, a 5G network, and another network) in different access standards. The BBU 1520 further includes a memory 1521 and a processor 1522. The memory 1521 is configured to store necessary instructions and data. The processor 1522 is configured to control the base station to perform necessary actions, for example, configured to control the base station to perform an operation procedure related to the network device in the foregoing method embodiment. The memory 1521 and the processor 1522 may serve one or more boards. In other words, a memory and a processor may be disposed on each board. Alternatively, a plurality of boards may share a same memory and a same processor. In addition, a necessary circuit may further be disposed on each board.

An embodiment of this application provides a first communications system. The first communications system may include the terminal device in any one of the embodiments shown in FIG. 3 to FIG. 5, and includes the network device in any one of the embodiments shown in FIG. 3 to FIG. 5. The terminal device is, for example, the terminal device 800 in FIG. 8. The network device is, for example, the network device 900 in FIG. 9.

An embodiment of this application provides a second communications system. The second communications system may include the terminal device in the embodiment shown in FIG. 6, and include the network device in the embodiment shown in FIG. 6. The terminal device is, for example, the terminal device 1000 in FIG. 10. The network device is, for example, the network device 1100 in FIG. 11.

An embodiment of this application further provides a computer-readable storage medium. The computer-readable storage medium stores a computer program. When the computer program is executed by a computer, the computer may implement a procedure related to the terminal device in the embodiment shown in FIG. 3 provided in the method embodiments.

An embodiment of this application further provides a computer-readable storage medium. The computer-readable storage medium is configured to store a computer program. When the computer program is executed by a computer, the computer may implement a procedure related to the network device in the embodiment shown in FIG. 3 provided in the method embodiments.

An embodiment of this application further provides a computer-readable storage medium. The computer-readable storage medium stores a computer program. When the computer program is executed by a computer, the computer may implement a procedure related to the terminal device in the embodiment shown in FIG. 4 provided in the method embodiments.

An embodiment of this application further provides a computer-readable storage medium. The computer-readable storage medium is configured to store a computer program. When the computer program is executed by a computer, the computer may implement a procedure related to the network device in the embodiment shown in FIG. 4 provided in the method embodiments.

An embodiment of this application further provides a computer-readable storage medium. The computer-readable storage medium stores a computer program. When the computer program is executed by a computer, the computer may implement a procedure related to the terminal device in the embodiment shown in FIG. 5 provided in the method embodiments.

An embodiment of this application further provides a computer-readable storage medium. The computer-readable storage medium is configured to store a computer program. When the computer program is executed by a computer, the computer may implement a procedure related to the network device in the embodiment shown in FIG. 5 provided in the method embodiments.

An embodiment of this application further provides a computer-readable storage medium. The computer-readable storage medium stores a computer program. When the computer program is executed by a computer, the computer may implement a procedure related to the terminal device in the embodiment shown in FIG. 6 provided in the method embodiments.

An embodiment of this application further provides a computer-readable storage medium. The computer-readable storage medium is configured to store a computer program. When the computer program is executed by a computer, the computer may implement a procedure related to the network device in the embodiment shown in FIG. 6 provided in the method embodiments.

An embodiment of this application further provides a computer program product. The computer program product is used to store a computer program. When the computer program is executed by a computer, the computer may implement a procedure related to the terminal device in the embodiment shown in FIG. 3 provided in the method embodiments.

An embodiment of this application further provides a computer program product. The computer program product is used to store a computer program. When the computer program is executed by a computer, the computer may implement a procedure related to the network device in the embodiment shown in FIG. 3 provided in the method embodiments.

An embodiment of this application further provides a computer program product. The computer program product is used to store a computer program. When the computer program is executed by a computer, the computer may implement a procedure related to the terminal device in the embodiment shown in FIG. 4 provided in the method embodiments.

An embodiment of this application further provides a computer program product. The computer program product is used to store a computer program. When the computer program is executed by a computer, the computer may implement a procedure related to the network device in the embodiment shown in FIG. 4 provided in the method embodiments.

An embodiment of this application further provides a computer program product. The computer program product is used to store a computer program. When the computer program is executed by a computer, the computer may implement a procedure related to the terminal device in the embodiment shown in FIG. 5 provided in the method embodiments.

An embodiment of this application further provides a computer program product. The computer program product is used to store a computer program. When the computer program is executed by a computer, the computer may implement a procedure related to the network device in the embodiment shown in FIG. 5 provided in the method embodiments.

An embodiment of this application further provides a computer program product. The computer program product is used to store a computer program. When the computer program is executed by a computer, the computer may implement a procedure related to the terminal device in the embodiment shown in FIG. 6 provided in the method embodiments.

An embodiment of this application further provides a computer program product. The computer program product is used to store a computer program. When the computer program is executed by a computer, the computer may implement a procedure related to the network device in the embodiment shown in FIG. 6 provided in the method embodiments.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description,, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for a computer device (which may be a personal computer, a server, a network device, or the like) to perform all or some of the steps of the methods described in the embodiments of this application. The foregoing computer-readable storage medium may be any usable medium accessible by a computer. By way of example, and not limitation, the computer-readable medium may include a random access memory (random access memory, RAM), a read-only memory (read-only memory, ROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of an instruction or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
determining assistance information, wherein the assistance information is used to determine a paging parameter configured for a terminal device; and
sending the assistance information.

2. The method according to claim 1, wherein the assistance information comprises one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

3. The method according to claim 1 or 2, wherein the method further comprises:
receiving first configuration information and/or second configuration information; and
monitoring a paging message based on third configuration information, wherein the third configuration information is determined based on received configuration information.

4. The method according to claim 3, wherein the first configuration information comprises first duration and/or a first quantity, the second configuration information comprises second duration and/or a second quantity, the first duration and the second duration each are duration of a paging transmission window, and the first quantity and the second quantity each are a quantity of paging occasions that need to be monitored in a paging transmission window.

5. The method according to claim 4, wherein
the third configuration information comprises third duration, the third duration is a larger value or a smaller value in the first duration and the second duration, and the third duration is duration of a paging transmission window; and/or
the third configuration information comprises a third quantity, the third quantity is a larger value or a smaller value in the first quantity and the second quantity, and the third quantity is a quantity of paging occasions that need to be monitored in a paging transmission window.

6. A communication method, wherein the method is applied to a network device, and comprises:
receiving assistance information, wherein the assistance information is used to determine a paging parameter configured for a terminal device;
determining first configuration information based on the assistance information, wherein the first configuration information is used by the terminal device to monitor a paging message; and
sending the first configuration information.

7. The method according to claim 6, wherein the method further comprises:
sending a paging message based on the first configuration information; or
receiving second configuration information, determining third configuration information based on the first configuration information and the second configuration information, and sending a paging message based on the third configuration information.

8. The method according to claim 7, wherein the first configuration information comprises first duration and/or a first quantity, the second configuration information comprises second duration and/or a second quantity, the first duration and the second duration each are duration of a paging transmission window, and the first quantity and the second quantity each are a quantity of paging occasions that need to be monitored in a paging transmission window.

9. The method according to claim 8, wherein
the third configuration information comprises third duration, the third duration is a larger value or a smaller value in the first duration and the second duration, and the third duration is duration of a paging transmission window; and/or
the third configuration information comprises a third quantity, the third quantity is a larger value or a smaller value in the first quantity and the second quantity, and the third quantity is a quantity of paging occasions that need to be monitored in a paging transmission window.

10. The method according to any one of claims 6 to 9, wherein the assistance information comprises one or more of the following:
type information of the terminal device;
mobility state information of the terminal device;
location information of the terminal device;
duration that is of a paging transmission window and that is expected by the terminal device; or
a quantity that is of paging occasions in a paging transmission window and that is expected by the terminal device.

11. The method according to any one of claims 6 to 10, wherein the network device is a core network device, and the method further comprises:
sending the assistance information and the first configuration information to an access network device serving the terminal device.

12. The method according to any one of claims 6 to 10, wherein the network device is an access network device, and the method further comprises:
sending the first relaxation configuration to a core network device serving the terminal device.

13. A terminal device, comprising:
one or more processors;
one or more memories; and
one or more computer programs, wherein the one or more computer programs are stored in the one or more memories, the one or more computer programs comprise instructions, and when the instructions are executed by the one or more processors of the terminal device, the terminal is enabled to perform the method according to any one of claims 1 to 5.

14. A network device, comprising:
one or more processors;
one or more memories; and
one or more computer programs, wherein the one or more computer programs are stored in the one or more memories, the one or more computer programs comprise instructions, and when the instructions are executed by the one or more processors of the network device, the network device is enabled to perform the method according to any one of claims 6 to 12.

15. A computer-readable storage medium, wherein the computer-readable storage medium is configured to store a computer program, and when the computer program is run on a computer, the computer is enabled to perform the method according to any one of claims 1 to 5 or the method according to any one of claims 6 to 12.

16. A chip, comprising one or more processors and a communications interface, wherein the one or more processors are configured to read instructions to perform the method according to any one of claims 1 to 5 or the method according to any one of claims 6 to 12.
